(19) **Europäisches Patentamt / European Patent Office / Office européen des brevets**

(11) **EP 4 316 063 B1**

(12) **EUROPEAN PATENT SPECIFICATION**

(45) Date of publication and mention of the grant of the patent:
**20.05.2026 Bulletin 2026/21**

(21) Application number: **22719027.9**

(22) Date of filing: **30.03.2022**

(51) International Patent Classification (IPC):
**H04W 68/00** $^{(2009.01)}$   **H04B 7/185** $^{(2006.01)}$
**H04W 64/00** $^{(2009.01)}$   **H04W 60/04** $^{(2009.01)}$

(52) Cooperative Patent Classification (CPC):
**H04W 68/00; H04B 7/1851; H04W 60/04; H04W 64/00**

(86) International application number:
**PCT/IB2022/052984**

(87) International publication number:
**WO 2022/208409 (06.10.2022 Gazette 2022/40)**

(54) **UE-CENTRIC LOCATION TRACKING FOR PAGING IN A WIRELESS COMMUNICATION NETWORK**

UE-ZENTRIERTE STANDORTVERFOLGUNG FÜR FUNKRUFE IN EINEM DRAHTLOSEN KOMMUNIKATIONSNETZ

SUIVI DE LA LOCALISATION CENTRÉ SUR L'UE POUR LA RADIOMESSAGERIE DANS UN RÉSEAU DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2021 US 202163167792 P**

(43) Date of publication of application:
**07.02.2024 Bulletin 2024/06**

(73) Proprietor: **Telefonaktiebolaget LM Ericsson (publ)**
**164 83 Stockholm (SE)**

(72) Inventors:
• **RUNE, Johan**
  181 29 Lidingö (SE)
• **MÄÄTTÄNEN, Helka-Liina**
  00510 Helsinki (FI)
• **YAVUZ, Emre**
  112 52 Stockholm (SE)

(74) Representative: **Ericsson**
**Patent Development**
**Torshamnsgatan 21-23**
**164 80 Stockholm (SE)**

(56) References cited:
**EP-A1- 2 822 336     US-A1- 2020 412 443**

• "3rd Generation Partnership Project; Technical Specification Group Radio Access Network; Solutions for NR to support non-terrestrial networks (NTN) (Release 16)", 2 December 2019 (2019-12-02), XP051834143, Retrieved from the Internet <URL:https://ftp.3gpp.org/tsg_ran/TSG_RAN/TSGR_86/Docs/RP-192504.zip RP-192504_38821-100_V8.doc> [retrieved on 20191202]
• FRAUNHOFER IIS ET AL: "NR-NTN: Tracking Area Management", vol. RAN WG3, no. Athens, Greece; 20190225 - 20190301, 15 February 2019 (2019-02-15), XP051604122, Retrieved from the Internet <URL:http://www.3gpp.org/ftp/tsg%5Fran/WG3%5Flu/TSGR3%5F103/Docs/R3%2D190178%2Ezip> [retrieved on 20190215]
• CMCC: "Discussion on key issues in NTN", vol. RAN WG3, no. Online; 20200817 - 20200828, 7 August 2020 (2020-08-07), XP051916103, Retrieved from the Internet <URL:https://ftp.3gpp.org/tsg_ran/WG3_lu/TSGR3_109-e/Docs/R3-205438.zip R3-205438 Discussion on key issues in NTN.doc> [retrieved on 20200807]

**Description**

CROSS REFERENCE TO RELATED APPLICATIONS

This application claims the benefit of and priority to U.S. Provisional Application No. 63/167792 filed on March 30, 2021, entitled" UE CENTRIC LOCATION AND TIME BASED REACHABILITY TRACKING".

BACKGROUND

In 3GPP release 8, the Evolved Packet System (EPS) was specified. EPS is based on the Long-Term Evolution (LTE) radio network and the Evolved Packet Core (EPC). It was originally intended to provide voice and mobile broadband (MBB) services but has continuously evolved to broaden its functionality. Since 3GPP release 13, NB-IoT and LTE-M are part of the LTE specifications and provide connectivity to massive machine type communications (mMTC) services.
Relevant prior art is provided in 3GPP RP-192504, in 3GPP R3-190178 and in US 2020/412443 A1.
In 3GPP release 15, the first release of the 5G system (5GS) was specified. This is a new generation's radio access technology intended to serve use cases such as enhanced mobile broadband (eMBB), ultra-reliable and low latency communication (URLLC) and mMTC. 5G includes the New Radio (NR) access stratum interface and the 5G Core Network (5GC). The NR physical and higher layers are reusing parts of the LTE specification, and to that add needed components when motivated by the new use cases. One such component is the introduction of a sophisticated framework for beam forming and beam management to extend the support of the 3GPP technologies to a frequency range going beyond 6 GHz.

NR Non-Terrestrial Networks

In 3GPP release 15, 3GPP started the work to prepare NR for operation in a Non-Terrestrial Network (NTN). The work was performed within the study item "NR to support Non-Terrestrial Networks" and resulted in TR 38.811 [1]. In 3GPP release 16, the work to prepare NR for operation in an NTN network continued with the study item "Solutions for NR to support Non-Terrestrial Network" [2]. Related work on providing the necessary enhancements for the 5G Core Network is also being progressed in 3GPP release 17, based on a study performed during the release 16 timeframe. In parallel the interest to adapt NB-IoT and LTE-M for operation in NTN is growing. As a consequence, 3GPP release 17 contains both a work item on NR NTN [3] and a study item on NB-IoT and LTE-M support for NTN
A satellite radio access network usually includes a satellite or space-borne platform, an earth-based gateway that connects the satellite to a base station or a core network, depending on the choice of architecture, a feeder link between the gateway and the satellite and an access link between the satellite and a UE.
Depending on the orbit altitude, a satellite may be categorized as low earth orbit (LEO), medium earth orbit (MEO), or geostationary earth orbit (GEO) satellite. LEO satellites orbit at heights ranging from 250 - 1,500 km, with orbital periods ranging from 90 - 120 minutes. MEO satellites orbit at heights ranging from 5,000 - 25,000 km, with orbital periods ranging from 3 - 15 hours. GEO satellites orbit at about 35,786 km, with an orbital period of 24 hours.
A communication satellite typically generates several beams over a given area. The footprint of a beam is usually in an elliptic shape, which has been traditionally considered as a cell. The footprint of a beam is also often referred to as a spotbeam. The footprint of a beam may move over the earth surface with the satellite movement or may be earth fixed with some beam pointing mechanism used by the satellite to compensate for its motion. The size of a spotbeam depends on the system design, which may range from tens of kilometers to a few thousands of kilometers. Two basic architectures have been considered, namely, a transparent payload and a regenerative payload. In a transparent payload architecture (also referred to as bent pipe architecture), the gNB is located on the ground and the satellite forwards signals/data between the gNB and the UE. In a regenerative payload architecture, the gNB is located in the satellite.
In the work item for NR NTN in 3GPP release 17, only the transparent architecture is considered.

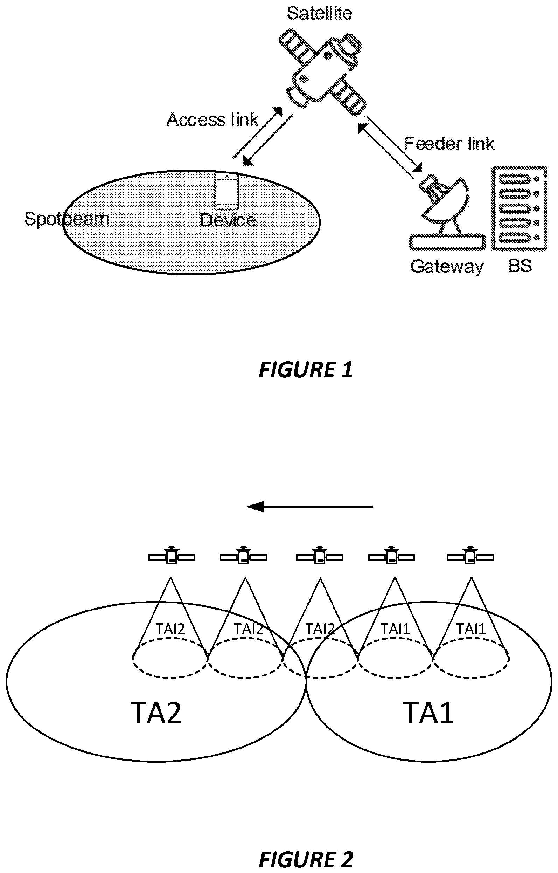

**Figure 1** shows an example architecture of a satellite network with bent pipe transponders. The gNB may be integrated in the gateway or connected to the gateway via a terrestrial connection (wire, optic fiber, wireless link).
Propagation delay is an important aspect of satellite communications that is different from the delay expected in a terrestrial mobile system. For a bent pipe satellite network, the round-trip delay may, due to the orbit height, range from tens of ms in the case of LEO to several hundreds of ms for GEO. This can be compared to the round-trip delays catered for in a cellular network which are limited to 1 ms. The propagation delay may also be highly variable due to the high velocity of the LEO and MEO satellites and change in the order of 10 - 100 $\mu$s every second, depending on the orbit altitude and satellite velocity.
In the context of propagation delay, the timing advance (TA) the UE uses for its uplink transmissions is essential and has to be much greater than in terrestrial networks in order for the uplink and downlink to be time aligned at the gNB, as is the case in NR and LTE. One of the purposes of the random access (RA) procedure is to provide the UE with a valid TA (which the network later can adjust based on the reception timing of uplink transmission from the UE). However, even the random access preamble (i.e. the initial message from the UE in the random access procedure) has to be transmitted with a timing advance to allow a reasonable size of the RA preamble reception window in the gNB, but this TA does not have to be as accurate as the TA the UE subsequently uses for other uplink transmissions. The TA the UE uses for the RA preamble transmission is called "pre-compensation TA". Various proposals are considered for how to determine the pre-compensation TA, all of which involves information originating both at the gNB and at the UE. In brief, the discussed alternative proposals include broadcast of a "common TA" which is valid at a certain reference point, e.g. a center point in the cell. The UE would then calculate how its own pre-compensation TA deviates from the common TA, based on the difference between the UE's own location and the reference point together with the position of the satellite. Herein, the UE acquires its own position using GNSS measurements and the UE obtains the satellite position using satellite orbital data (including satellite position at a certain time) broadcast by the network.

The alternative proposals also include that the UE autonomously calculates the propagation delay between the UE and the satellite, based on the UE's and the satellite's respective positions, and the network/gNB broadcasts the propagation delay on the feeder link, i.e. the propagation delay between the gNB and the satellite. Herein, the UE acquires its own position using GNSS measurements and the UE obtains the satellite position using satellite orbital data (including satellite position at a certain time) broadcast by the network. The pre-compensation TA is then twice the sum of the propagation delay on the feeder link and the propagation delay between the satellite and the UE.

The alternative proposals also include that the gNB broadcasts a timestamp (in SIB9), which the UE compares with a reference timestamp acquired from GNSS. Based on the difference between these two timestamps, the UE can calculate the propagation delay between the gNB and the UE, and the pre-compensation TA is twice as long as this propagation delay.

A second important aspect closely related to the timing is a Doppler frequency offset induced by the motion of the satellite. The access link may be exposed to Doppler shift in the order of 10 - 100 kHz in sub-6 GHz frequency band and proportionally higher in higher frequency bands. Also, the Doppler shift is varying, with a rate of up to several hundred Hz per second in the S-band and several kHz per second in the Ka-band.

Tracking Areas (and RAN-based Notification Areas)

In terrestrial networks based on NR and LTE, tracking areas are used by the network to coarsely keep track of a UE's whereabouts, especially UE's in RRC_IDLE or RRC_INACTIVE state. In such terrestrial networks, a tracking area (TA, not to be confused with the Timing Advance) is a set of cells and each cell belongs to one and only one TA. A UE can identify the TA a cell belongs from the Tracking Area Identity (TAI), which consists of the PLMN ID and a Tracking Area Code (TAC), and which is broadcast in the system information of each cell.

Furthermore, in terrestrial NR and LTE networks, a UE is configured with a list of TAs (in the form of a list of TAIs), representing the area the UE (in RRC_IDLE or RRC_INACTIVE state) is allowed to move around in without informing the network of its location. If the UE moves (re-selects) to a cell that does not belong to any of the TAs in the UE's configured list of TAs, the UE has to inform the network. This process is called Tracking Area Update in LTE (where the UE sends a Tracking Area Update Request NAS message) while the corresponding procedure is called Registration in NR/5G (where the UE sends a Registration Request NAS message with the 5GS Registration Type IE set to "mobility registration updating"). The Tracking Area list provided to the UE (represented by a list of TAI(s)) is referred to as a "registration area" in 5G.

The tracking area list a UE is configured with is related to core network (CN) initiated paging (i.e. the mechanism by which the network can reach a UE which is in RRC_IDLE state) in the sense that in order to be sure to reach the UE, the CN has to page the UE in all the cells of the TAs in the UE's list of TAs. The CN may page the UE in all these cells at the first page attempt, but the CN may also choose to first page the UE in a smaller number of cells, based on the UE's last known location, and then increase or complement the cells in which the UE is paged in a second attempt in case the UE does not respond to the first page attempt. The CN can also use the UE's current TA for other purposes and therefore the UE's TA, as well as its serving cell ID may be signaled over the RAN-CN interface, e.g. from a gNB to an AMF.

In NR, there is also a RAN initiated paging mechanism which is used when the network needs to reach a UE in RRC_INACTIVE state. To support RAN initiated paging, a UE can be configured with a RAN-based Notification Area (RNA) when it is released to RRC_INACTIVE state. A RNA may be a list of cells, a list of RAN Areas (identified by a list of RAN Area Codes (RANACs), which are unique within a TA) or a list of TAs. As long as a UE in RRC_INACTIVE state does not leave its configured RNA it does not have to inform the network of its location, but if it leaves the RAN, it has to contact the network to perform RNA update (i.e. send an *RRCResumeRequest* message with the *ResumeCause* IE set to "rna-Update"). During RAN initiated paging the UE is paged in its configured RNA.

In addition to mobility Registration (or Tracking Area Update) and RNA update triggered by UE movements, i.e. a UE leaving its configured RNA or list of TAs, a UE may perform timer controlled periodic Registration (or Tracking Area Update) and periodic RNA update.

It is 3GPP's ambition to reuse for NTN as much as possible of the standards specified for NR in terrestrial networks, but reusing the above described TA and RNA concepts in Non-Terrestrial Networks is not straightforward, since the satellites are moving relative to earth, cells may be moving and gNBs may be moving. Different concepts have been proposed, including that the TAI follows a cell as it moves or that the TAI is fixed to a geographical area and should be adopted and broadcast by the cell passing over the geographical area. The geographically fixed TA concept has the most traction in 3GPP. A similar mechanism is relevant also for earth fixed beams/cells, since the cell covering the cell area may change with satellite and/or feeder link switches (at least conceptually snice such events probably will involve change of the PCI).

In addition, when geographically fixed TAs are used in a moving cells deployment, a cell may have to broadcast multiple TAIs when moving across TA borders. Momentary switching from one TAI to another is referred to as hard TAI update, or hard TAI switch, while broadcasting of multiple (e.g. two) TAIs while a TA border passes through the cell is referred to as soft TAI update, or soft TAI switch.

In a 3GPP email discussion after RAN2#111-e, the specific aspect for earth moving beams/cells is to be brought up regarding the handling of TAs, TAIs, change/update of TAs, and Registration. During the NTN study item in 3GPP, both hard and soft switch have been considered. Hard switch means that each cell can broadcast only one tracking area code. When this is combined with geographically/earth fixed tracking area, it will create fluctuation at the border areas of these earth fixed tracking areas. Hard TAI update is depicted in **Figure 2.** In particular, **Figure 2** illustrates a tracking area switch for earth moving beams/cells with hard TAI update where the satellites are moving from the right to the left.

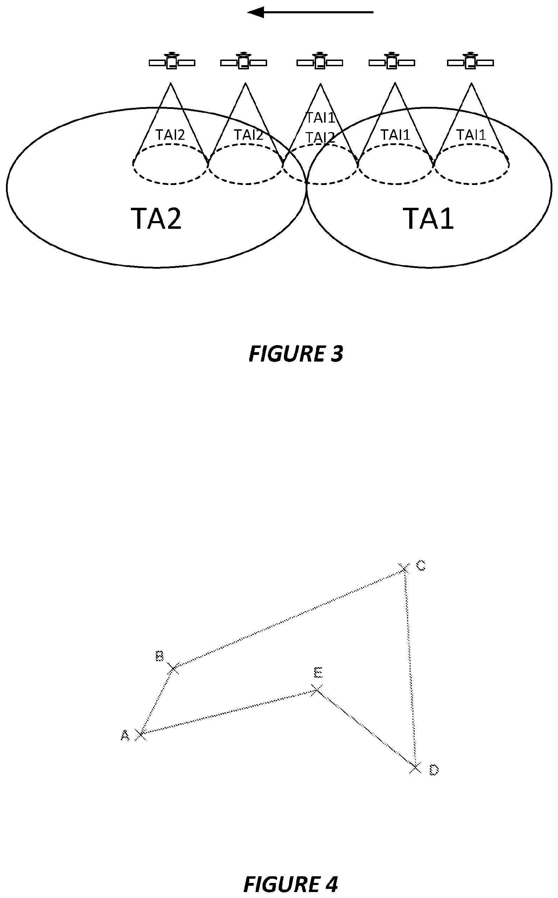

Soft TAI update allows the network to broadcast more than one TAI for a cell and PLMN, during certain (intermittent) periods of time. Soft TAI update is depicted in **Figure 3,** which illustrates a tracking area update for Earth moving beams with soft TAI update. (The satellites are moving from the right to the left.)

3GPP support for representation of geographical areas

3GPP TS 23.032 "Geographical Area Description (GAD)" [5] provides geographical area descriptions which can be converted into an equivalent radio coverage map. The shape definitions use the World Geodetic System 1984 (WGS 84) ellipsoid as a reference. For example, a point and radius are defined as follows. A "point" refers to an ellipsoid having co-ordinates coded with an uncertainty of less than 3 meters. The latitude is coded with 24 bits: 1 bit of sign and a number between 0 and $2^{23}$-1 coded in binary on 23 bits. The relation between the coded number $N$ and the range of (absolute) latitudes $X$ it encodes is the following ($X$ in degrees):

$$N \le \frac{2^{23}}{90} X < N+1$$

except for $N=2^{23}$-1, for which the range is extended to include $N+1$.

The longitude, expressed in the range -180°, +180°, is coded as a number between $-2^{23}$ and $2^{23}$-1, coded in 2's complement binary on 24 bits. The relation between the coded number $N$ and the range of longitude $X$ it encodes is the following ($X$ in degrees):

$$N \le \frac{2^{24}}{360} X < N+1$$

An inner radius is encoded in increments of 5 meters using a 16 bit binary coded number N. The relation between the number N and the range of radius r (in meters) it encodes is described by the following equation:

$$5N \le r < 5(N+1)$$

except for $N=2^{16}$-1 for which the range is extended to include all greater values of $r$. This provides a true maximum radius of 327,675 meters.

The uncertainty radius is encoded as for the uncertainty latitude and longitude.

As another example, a polygon is defined as follows in 3GPP TS 23.032 [5] as an arbitrary shape described by an ordered series of points (in the example pictured in **Figure 4,** A to E). The minimum number of points allowed is 3, and the maximum number of points allowed is 15. The points shall be connected in the order that they are given. A connecting line is defined as the line over the ellipsoid joining the two points and of minimum distance (geodesic). The last point is connected to the first. A connecting line may not cross another connecting line, and two successive points must not be diametrically opposed on the ellipsoid.

The described area is situated to the right of the lines with the downward direction being toward the Earth's centre and the forward direction being from a point to the next.

This definition does not permit connecting lines greater than roughly 20 000 km. If such a need arises, the polygon can be described by adding an intermediate point.

Computation of geodesic lines is not simple. Approximations leading to a maximum distance between the computed line and the geodesic line of less than 3 metres are acceptable.

SUMMARY

The invention is defined in the claims.

The following embodiments are provided for illustrative purposes. A method performed by a wireless device for improved reachability for paging in a wireless communication network includes obtaining geographic location information indicating a geographic location or zone in which the wireless device is located, providing the geographic location information to a network node, and receiving a paging message from the wireless communication network based at least in part on the geographic location information.

The method may further include receiving, from the wireless communication network, information associated with a geographic area within which the wireless device can move without informing the wireless communication network of its location, wherein the geographic area includes the location or zone in which the wireless device is located. The paging message from the wireless communication network may be based at least in part on the geographic area within which the wireless device can move without informing the wireless communication network.

In some embodiments, the wireless device obtains the geographic location information from a source other than the wireless communication network. For example, the wireless device may obtain the geographic location information from a global navigation satellite system.

In some embodiments, the wireless device keeps track of its location after providing the geographic location information to the network node.

The method may further include providing the network node with updated location information upon any of the following events: the wireless device leaves the geographic area, at a specific time, on the occurrence of a triggering event, on a periodic basis, and/or when the wireless device has moved a threshold distance from a previous location of the wireless device.

The method may further include providing the network node with additional information regarding a status of the wireless device. The additional information may include one or more of a battery status of the wireless device, a velocity of the wireless device, and/or a direction of travel of the wireless device.

The method may further include receiving, from the wireless communication system, updated information associated with an updated area within which the wireless device can move without informing the wireless communication network of its location.

The geographic area within which the wireless device can move without informing the network of its location may a shape of, for example, a circle, an ellipse, a polygon, and/or a shape based at least in part on a country's border.

The information associated with the geographic area within which the wireless device can move without informing the wireless communication network of its location may further include information associated with changes in shape of the area over time.

The may further include receiving a list of tracking areas from the network node.

In some embodiments, the paging message is received without the wireless device first receiving a list of tracking areas associated with the paging message.

Some embodiments provide a wireless device configured to perform any of the foregoing operations.

Some embodiments provide a wireless device including a processing circuit, a wireless transceiver coupled to the processing circuit, and a memory coupled to the processing circuit. The memory stores computer program instructions that, when executed by the processing circuit, cause the wireless device to perform any of the foregoing operations.

A method performed by a network node in a wireless communication network according to some embodiments includes obtaining, from a wireless device, geographic location information associated with the wireless device, wherein the geographic location information indicates a geographic location or zone in which the wireless device is located. The method further includes determining, in response to obtaining the geographic location information of the wireless device, at least one cell of the wireless communication network that covers the geographic location associated with the wireless device or that fully or partially overlaps with the zone associated with the wireless device, and transmitting a paging message to the wireless device in the at least one cell.

The method may further include determining a geographic area, in which the geographic location or the zone associated with the wireless device is included, within which the wireless device can move without informing the wireless communication network.

The method may further include transmitting, to the wireless device, information associated with the geographic area within which the wireless device can move without informing the wireless communication network.

The method may further include identifying additional cells neighbouring the determined cell covering the geographic location associated with the wireless device. Transmitting the paging message may include transmitting the paging message in the additional cells.

In some embodiments, wherein obtaining the geographic location associated with the wireless device includes receiving a location report from the wireless device. The location report may provide the geographic location associated with the wireless device with less accuracy than the wireless device is capable of providing.

The method may further include receiving an updated location or updated zone associated with the wireless device and determining an updated cell covering the updated location.

The updated location or updated zone may be received upon occurrence of any of: the wireless device leaves the geographic area within which the wireless device can move without informing the wireless communication network, at a specific time, upon a triggering event, on a periodic basis, and/or when the wireless device has moved a threshold distance from the geographic location or from the location the wireless device was located at when reporting the zone as the location information.

The geographic area within which the wireless device can move without informing the wireless communication network may have a shape including a circle, an ellipse, a polygon, and/or a shape based at least in part on a country's border.

In some embodiments, determining the cell covering the geographic location includes mapping the geographic area within which the wireless device can move without informing the wireless communication network to a set of cells or virtual cells that currently overlap with the geographic area.

The set of cells or virtual cells may include moving cells in a non-terrestrial network.

Transmitting the paging message to the wireless device may include transmitting paging messages within an increasingly large geographic paging area with successive paging attempts.

In some embodiments, an initial paging area is smaller than the geographic area within which the wireless device can move without informing the wireless communication network.

The method may further include obtaining a velocity and/or a direction of travel associated with the wireless device, and using the velocity and/or direction to determine the geographic area within which the wireless device can move without informing the network and/or to determine the area or the set of cells to page the wireless device in.

The geographic area within which the wireless device can move without informing the network may change over time.

In some embodiments, obtaining the geographic location of the wireless device includes determining a position of the wireless device based on an identity of a cell or beam used by the wireless device to communicate with the network node.

The method may further providing the wireless device with a list of tracking areas.

Some embodiments provide a network node configured to perform any of the foregoing operations of a network node.

Some embodiments provide a network node including a processing circuit, a wireless transceiver coupled to the processing circuit, and a memory coupled to the processing circuit. The memory stores computer program instructions that, when executed by the processing circuit, cause the network node to perform any of the foregoing operations of a network node.

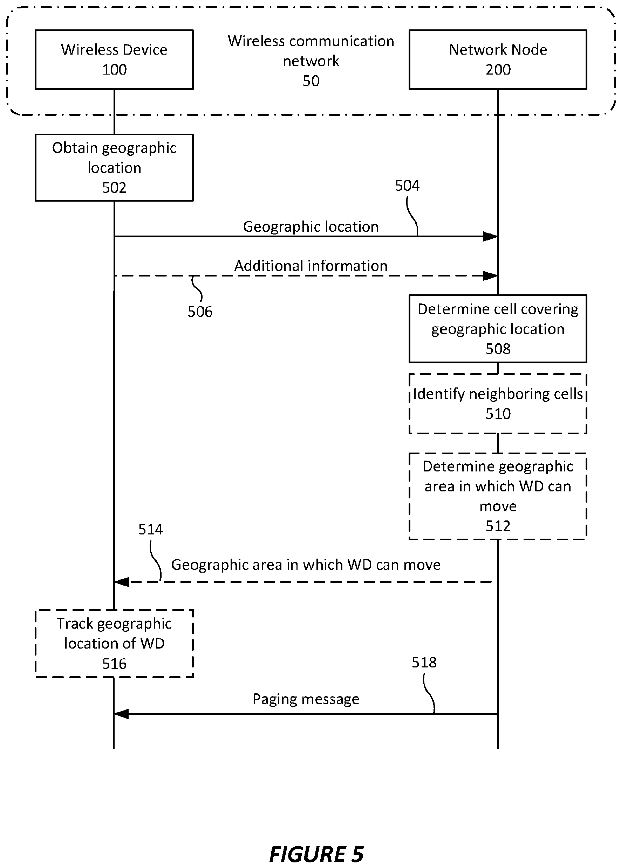

In the following description, the invention is described with particular reference to figure 5, while the description of the remaining figures is provided for illustrative purposes for a better understanding of the invention.

BREIF DESCRIPTION OF THE DRAWINGS

**Figure 1** shows an example architecture of a satellite network with bent pipe transponders.

**Figure 2** illustrates a tracking area switch for earth moving beams/cells with hard TAI update.

**Figure 3** illustrates a tracking area update for Earth moving beams with soft TAI update.

**Figure 4** illustrates a polygon as defined in 3GPP TS 23.032.

**Figures 5 and 6** are flow diagrams that illustrate operations of a wireless device and a network node according to some embodiments.

**Figure 7** is a block diagram of a wireless network in accordance with some embodiments;

**Figure 8** is a block diagram of a user equipment in accordance with some embodiments

**Figure 9** is a block diagram of a virtualization environment in accordance with some embodiments;

**Figure 10** is a block diagram of a telecommunication network connected via an intermediate network to a host computer in accordance with some embodiments;

**Figure 11** is a block diagram of a host computer communicating via a base station with a user equipment over a partially wireless connection in accordance with some embodiments;

**Figure 12** is a block diagram of methods implemented in a communication system including a host computer, a base station and a user equipment in accordance with some embodiments;

**Figure 13** is a block diagram of methods implemented in a communication system including a host computer, a base station and a user equipment in accordance with some embodiments;

**Figure 14** is a block diagram of methods implemented in a communication system including a host computer, a base station and a user equipment in accordance with some embodiments;

**Figure 15** is a block diagram of methods implemented in a communication system including a host computer, a base station and a user equipment in accordance with some embodiments; and

**Figure 16** illustrates a wireless network in accordance with some embodiments.

DETAILED DESCRIPTION OF EMBODIMENTS

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

As noted above, the ambition to reuse the standardized principles, concepts and mechanisms from terrestrial NR results in problems when the concepts developed for terrestrial networks are confronted with the properties of Non-Terrestrial Networks. In particular, there are complications around what TAI (and RANAC) to broadcast in a cell at a particular time and place. And related to this, with moving satellites and/or cells (and gNBs in the regenerative payload architecture), cell switches and feeder link switches, the borders of the TAs become fuzzier (e.g. moving back and forth). For instance, with hard TAI switch/update, the TA a UE is located in may change even though the UE itself is not physically moving.

Furthermore, soft TAI switch/update deviates from the NR (and LTE) principle of a cell belonging to one and only one TA. This deviation may be amplified depending on how cell IDs are treated in NTNs. Currently, the principle having the most support in 3GPP is that cell IDs, in contrast to the case of TAIs, will not be fixed to a geographical area (at least not in the case of moving cells), which would make the association between cells and TAs very dynamic. If the different principles for TAIs and cell IDs prevail in 3GPP, this will the break the association between cells/cell IDs and TAIs that form the basis for TAs in NR and LTE. The changed use of TAIs (and related cell IDs) in the RAN may cause problems for the CN and various ways of translating between TAIs used in the RAN and TAIs used in the CN have been proposed as a workaround. This would complicate the system and the interaction between the RAN, the CN and the UE. As can be seen from the above, in general, the usage and management of TAIs become problematic when the principles of terrestrial NR (and LTE) are to be reused in NTNs.

Certain aspects of the present disclosure and their embodiments may provide solutions to these or other challenges. It is proposed herein to avoid reliance of broadcast identifiers in location tracking through a solution where the tracking of a UE's coarse location in RRC_IDLE state and/or RRC_INACTIVE state, is UE centric in the sense that each UE is treated individually in terms of how much it can move without informing the network and in terms of how it is paged. To this end, the UE's location forms the basis for the UE's configuration regarding updating of its location to the network and regarding how paging of the UE is performed. This means that no UE common (i.e. common for all UEs) TAs are needed and broadcasting of TAIs can be eliminated. The registration area (i.e. the area in which the UE is allowed to move around without informing the network) may be allocated as a shape around the UE's current location and when the UE is to be paged, it is the network's responsibility to map the registration area to a set of cell(s) in which to page the UE. The UE's responsibility is to keep track of its own location, presumably using GNSS, possibly complemented by movement tracking based on internal accelerometer(s) and/or gyroscope(s), and inform the network if it moves outside the registration area borders.

In some embodiments, the UE centricity of the registration area is complemented by a time-dependence, wherein the area in which the UE is allowed to move without informing the network grows with the time that has elapsed since the registration area was allocated to the UE.

In some embodiments, the notion of an area in which the UE is allowed to move without informing the network is removed altogether and replaced by stepwise escalated paging based the UE's last known location, preferably complemented by periodic registration.

In some embodiments, broadcasting of TAIs are combined with finegranular (e.g. GNSS based) location reporting from the UE, where the core network can maintain legacy procedures, managing tracking areas and TAI lists, while the RAN may handle optimization of paging based on the UE's reported accurate location reporting.

Certain embodiments may allow for the reachability tracking of a UE in RRC_IDLE or RRC_INACTIVE state to be based on a UE's GNSS measurements instead of broadcast identifiers, wherein the obtained UE location forms the basis for stepwise paging. In some embodiments, the UE is allocated a UE centric, UE specific registration area (i.e. an area in which the UE is allowed to move around without informing the network of the UE's whereabouts) in the form of a geographical area (with a geometrically defined shape) which is independent of cell borders, wherein the UE uses GNSS measurements to monitor whether it moves outside its registration area.

In some embodiments, no registration area is allocated to the UE. Instead, the network relies only on the last obtained UE location, e.g. the UE's last reported location, to form the starting point for stepwise paging. In some embodiments, this is combined with periodic registration, which, in practice, limits the size of the area in which the network has to page the UE to reach it.

Some embodiments address the problems arising from the ambition to reuse the standardized principles, concepts and mechanisms concerning TAs and TAIs from terrestrial NR in Non-Terrestrial Networks, and (in some embodiments) leverages the large geographic scale (e.g. in terms of large cells) of Non-Terrestrial Networks to achieve this without necessarily increasing the paging related signalling overhead.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

The embodiments outlined below are described mainly in terms of NR based NTNs, but they are equally applicable in a NTN based on LTE technology. A network node, which typically will be a gNB (e.g. in an NR based NTN) or an AMF in 5G, but which may also be an eNB (e.g. in an LTE based NTN) or an MME, or a base station or an access point in another type of network, or any other network node with the ability to directly or indirectly communicate with a UE. Although the embodiments of the solution are mainly described in terms of RRC_IDLE state and core network initiated paging, the solution and its embodiments are equally applicable to RRC_INACTIVE state and RAN initiated paging.

Global Navigation Satellite Systems (GNSS) are used in the proposed solutions. The most well-known is the American Global Positioning System (GPS), but there are also other also other similar systems which could provide the functionality utilized in the proposed solution, e.g. the Russian Global Navigation Satellite System (GLONASS), the Chinese BeiDou Navigation Satellite System and the European Galileo.

With the embodiments described herein, the problematic aspects around TAIs, e.g. the different TAIs used in the RAN and in the CN, are eliminated through a TA solution that does not rely on broadcasting of TAIs in the cells. Instead, TAs, or tracking of a UE's coarse location in RRC_IDLE state, are UE centric in the sense that each UE is treaded individually in terms of how much it can move without informing the network and in terms of how it is paged. The same solution principle can be applied also to RNAs, or tracking of a UE's coarse location in RRC_INACTIVE state.

To this end, the UE's location forms the basis for the UE's configuration regarding updating of its location to the network and regarding how paging of the UE is performed. This means that no UE common (i.e. common for all UEs) TAs are needed and broadcasting of TAIs can be eliminated.

This is facilitated in part by the ability of the network to know which cell(s) that cover(s) any given location at any given moment. Regardless of how well the network tracks its own satellites' movements and beam directions, there will always be some uncertainty associated with such location to cell mapping knowledge, since cell borders are inherently fuzzy. Hence, in border cases, the network would have to add some margin with additional cell(s) in its location to cell mapping. The cell border fuzziness is due to that, from a UE's point of view, a border between two cells is in practice determined by the signal strength or signal quality the UE perceives from DL transmissions in two neighboring cells. In addition, A UE can be configured to use a hysteresis during mobility (in terms of e.g. cell reselection or handover or conditional handover) procedures, which in practice can make the cell border move back and forth from the UE's perspective (i.e. the border that determines which cell the UE camps on or is connected in).

In some embodiments, a UE reports its location when it registers in the NTN. The network, e.g. the AMF or the anchor gNB (i.e. the gNB storing the context of a UE in RRC_INACTIVE state), would provide the UE with an area in which it can move around without informing the network, i.e. a registration area provided by the AMF or a RAN-based notification area provided by the anchor gNB. The only real requirement for this area is that the UE's current location is within the area, otherwise the shape and size of the area could in principle be arbitrary. A straightforward approach could be to make the area a circle with the UE's location in the center at the time the registration area is allocated. The network would then only have to supply the radius, R, to the UE. The UE keeps track of its own movement (e.g. using GNSS, possibly complemented by measurements by internal sensors, such as accelerometer(s) and/or gyroscope(s)) and if it exits the circular registration area, it informs the network (e.g. sends a Registration Request message). The network can then allocate a new registration area to the UE, preferably based on the UE's current location, e.g. with the UE's location at the center of a circular registration area. To support this allocation of a new registration area, the UE should inform the network of its current location when it informs the network that it has left its registration area (e.g. including the UE's location in the Registration Request message). In addition, the UE may be configured to perform periodic registration, i.e. to periodically contact the network to inform it that the UE is still reachable, even if the UE is still located within its allocated registration area. During such periodic registration, the UE may provide its current location and the network may configure a new registration area for the UE or let the UE's current registration area remain valid.

When the UE is to be paged (assuming RRC_IDLE state), the AMF would map the UE's registration area to a set of (virtual) cells which currently overlap with the registration area and which the UE has to be paged in if the entire registration area is to be covered. As an option, the cells the AMF maps the UE's registration area to are "virtual" cells (which are used in the communication between AMFs and gNBs) and then the gNB would determine which actual (potentially moving) physical cells in which it would need to send the page. Stepwise paging may be used if the network determines that this is a good tradeoff between paging signaling resource usage and paging delay. Stepwise paging could be implemented e.g. by increasing the radius of a circular area the UE is paged in for each new paging attempt until the radius is equal to the radius of the UE's registration area (or slightly greater to provide some margin), in the case where the UE's registration area is a circle. With this method, the network may choose not to page the UE in an area where it has been paged in a previous step. With the stepwise increased radius principle, this would mean that the UE would be paged in a small circle in the first step and in the subsequent steps the UE would be paged in a hollow circle, i.e. only in the outer areas of the circle (for this step) that have not been covered by previous page attempt(s). Other variants of piece by piece covering a UE's complete registration area with pages may include the UE being paged in any part of the registration area for each step, wherein the different parts may be overlapping or non-overlapping. In all variants of stepwise paging, as soon as the network receives a response from the UE, subsequent paging steps should preferably be cancelled.

As an alternative to mapping the UE's registration area to a set of cells in the AMF, the AMF may only have to know which gNBs to contact and leave to the gNBs to determine which cell(s) to page the UE in, based on the UE's registration area, e.g. the center point and radius of the circle constituting the UE's registration area, wherein the UE's registration area definition (or, in case of stepwise paging, the definition of the part of the UE's registration area the UE should be paged in during this paging attempt) would be provided by the AMF in the NGAP Paging message. If the UE is to be paged in RRC_INACTIVE state, the task of identifying cell(s) overlapping with the UE's registration area (e.g. a RNA based on the UE's location) is on the anchor gNB. As a possible solution variant, the anchor gNB only has to know which other gNBs to involve, but leave to these other gNBs to determine which of their cells the UE should be paged in, wherein the anchor gNB would provide the definition of the UE's registration area (or, in case of stepwise paging, the definition of the part of the UE's registration area the UE should be paged in during this paging attempt), when requesting the other gNB(s) to page the UE, e.g. using an XnAP RAN Paging message.

As an option, an AMF or an anchor gNB may delegate the stepwise paging to the involved gNBs, such that each involved gNB is responsible for the stepwise increase or change of the entire paging area. The steps may be determined by each gNB in a distributed fashion, or the AMF or anchor gNB may provide each involved gNB with instructions on the steps, so that the combined effect of the individual gNB's stepwise paging will be the intended overall stepwise paging (e.g. increasing the radius of the circular area, or hollow circular area, the UE is paged in).

Regardless of which network node that controls the stepwise paging, the decision whether to use stepwise paging, as well as which cells/beams/areas to page the UE in during each paging step, lies with the network. The network may choose to page the UE in non-overlapping areas in each step (i.e. avoid repeating the page in the same cell) or it may choose to use overlapping areas (e.g. just adding areas/cells to the area the UE is paged in (without removing any) during consecutive paging steps). The paging in each step may be centered around the UE's last known location (e.g. in the form of circles or hollow circles) or the areas in various paging steps may be differently chosen. As an option, the network may let the time that has elapsed since the UE's last known location was recorded (e.g. through a report from the UE or some other means) and/or the UE's last known velocity (if such information is available) impact the stepwise paging, e.g. such that a larger area for the UE to be paged in is chosen for the initial paging step the longer time that has elapsed since the UE's last known location was recorded and/or the greater the last known UE velocity is. In general, the network may determine the stepwise paging strategy as a tradeoff between signaling/paging overhead and paging delay.

Note that the above described circular registration area is just an example, and any other shape of the registration area is conceivable, as long as it includes the UE's current location (e.g. the location the UE reports in its Registration Request message). For instance, a registration area could be defined by a polygon or an ellipse or an area defined by multiple focal points (where two focal points makes it an ellipse and one focal point makes it a circle). To represent the shape of a registration area, the geographical area definitions means specified by 3GPP in 3GPP TS 23.032 "Geographical Area Description (GAD)" **Error! Reference source not found.** may be used, but other ways of representing, or describing, a geographical area to form a registration area may also be used. Irrespective of the chosen area representation format or means, the reference point for the area, which defines the area's location on the surface of the earth, has to be defined, as well as the reference point's relation to the shape. In addition, if the shape is not rotationally symmetric (i.e. if the shape differs depending on how it is rotated), the direction, or angular definition, of the shape's footprint on the ground has to be defined. These definitions may be either configured or specified in a standard, or parts may be configured while other parts may be specified in a standard. A straightforward example of a rotationally symmetric area shape is a circle, which for example may be centered around the UE's location at the time of the allocation of the registration area. Another example could be a registration area with quadric shape with the UE's location at the center. Then the aera's direction also has to be defined, for instance using the smallest angle between a longitude and one of the quadrate's sides. Yet another example could be an elliptic registration area, with the UE's location at the center or at one of the focal points. With this example, the UE's location determines the area's location on the ground. In addition, two shape parameters are needed to describe the elliptic shape (wherein its size and eccentricity are captured), e.g. the semi-minor axis and the semi-major axis. Furthermore, the ellipse's direction also has to be defined, e.g. using the angle between a semi-major axis and north.

However, even with the example of the circular registration area, the area may be defined such that the UE's location at the time of allocation of the registration area is somewhere else within the area than at the center. In that example, the definition of the area may include e.g. the circle's radius and the coordinates of the circle's center point. As one example, the network may use a reference point on the ground as the center point of a circular registration area, or as a reference point for a registration area of any kind of shape. The network may provide such a reference point specifically for a certain UE specific registration area allocation. Since this reference point is not tied to the UE's precise location, the flexibility in how it is placed in relation to the registration area shape is greater. For instance, with a polygon-shaped registration area, the reference point may be defined to represent one of the polygon's corners.

In some embodiments, the network may use a cell reference point or a beam reference point which may already be configured for other purposes, e.g. as a reference point for a cell-common or beam-common timing advance. Selecting a registration area reference point that is independent of the precise location of the UE has the advantage that it does not depend on the UE reporting its location. However, the network still has to make sure that the UE is located inside the allocated registration area at the time of allocation. Hence, when using a reference point other than the UE's location, e.g. using a cell reference point (roughly representing the center of the cell's coverage area), or a beam reference point (roughly representing the center of a beam footprint), the network should ensure that the assigned area covers the locations where the UE may be located, e.g. covering the estimated cell coverage area (with some margin) or covering the estimated beam footprint (with some margin).

As a further option, the UE's location may be complemented with the UE's velocity (in terms of size and direction or only the size), e.g. reported by the UE in combination with the UE's location. The network may use the velocity information when choosing the size and/or shape of the UE's registration area, as well as where in the registration area the UE is located (at the time when the registration area is allocated). For instance, a greater UE speed may make the network allocate a greater registration area, and if the UE's movement direction is known, the shape of the registration area may be elongated (e.g. as an ellipse) in the UE's movement direction and the registration area may be placed so that the UE's location (at the time of allocation of the registration area) is closer to the (part of the) registration area border the UE is moving away from than to the (part of the) registration area border the UE is moving towards.

As an additional option, the UE's registration area size and/or shape may be determined by the network based on the network's knowledge of country borders. This would allow a registration area that is kept withing the borders of the country where the UE is currently located and ensure that the UE contacts the network if it moves out of the country. This can help to ensure that the UE is served by a network that is authorized to operate in the country where the UE is located.

As one option, a registration area shape definition with the ambition that at least part of the area border should coincide with a country border could be defined as a polygon, where (parts of) the points of the polygon (i.e. the points which are connected with straight lines to form the polygon) are located on the concerned country border such that the resulting polygon contains a border part which approximately follows a country border. That is, locating points on the country borders could be seen as "sampling" the country border and the denser these "sample points" are located, the more accurately the polygon will follow the country border. One example of parameters that could be used for such a polygon definition may be the polygon definition parameters specified in 3GPP TS 23.032 **Error! Reference source not found.** (although the upper limit of 15 points in the polygon, as defined in 3GPP TS 23.032 **Error! Reference source not found.,** would have to be extended to enable finer granularity in the country border tracking).

As another option, to make the relevant part of the registration area border exactly coincide with the concerned country border (e.g. a part of the border between country A and country B), the country border is used as a "parameter" in the area description. For the UE to be able to use such a country border "parameter", the UE may access map data (since a country border is essentially a geographical concept which is visible on a map, but which cannot be found from GNSS measurements alone). For instance, two points could be defined using coordinates, where these points are both located on the concerned country border, marking the start and end point of the distance along the country border that should coincide with the registration area border. Then the area definition contains an indication that the area border line connecting to the two defined points should follow the country border between country A and country B. The UE would then use its accessible map data to determine the exact path this part of the country border (and thus registration area border) follows.

In another variant of utilizing a country border as a part of the registration area definition (and relying on the UE's awareness of country borders based on available map data), an area shape is defined, e.g. circle, which spans across a country border (e.g. a border between country A and country B, such that at least one part of the area shape is located in country A and at least one other part of the area shape is located in country B (i.e. such that the area shape is divided into at least two parts located in different countries). This area shape definition is associated with an indication of the concerned country border (i.e. the country border that crosses the area shape's border(s)) and an indication of which part(s) of the area shape that defines the UE's registration area. An example could be that an area shape in the form of a circle, wherein the border between country A and country B crosses through the circle, wherein the registration area configuration information provided to the UE could be a definition of the circle (including its location), e.g. in the form of center point and radius, an indication of the concerned country border (i.e. the border between country A and country B) and an indication stating that the part of the circle that is located in country A constitutes the UE's registration area. Another example could be that the UE is provided with an area shape definition (including its location and, if applicable, orientation) associated with an indication of the country (or countries) whose part of the defined area shape constitute the UE's registration area. For instance, such configuration information may consist of a circle definition, e.g. center point and radius, and an indication stating that the part of the circle that constitute the UE's registration area is the part of the circle that is located in country A.

As a further option, the network may be aware from previously retrieved UE capability information whether the UE has access to map data and may adapt the registration area definition accordingly. For instance, the network could provide the UE with an area definition using the country border as a parameter if the UE has access to map data, while if the UE does not have access to map data, the network would provide the UE with a registration area definition approximately following the country border (without using the country border as such as a parameter in the area definition). As yet a further option (not relying on UE capability information about access/not access to map data), the network may provide two area definitions to the UE, one using the country border as a parameter in the area definition, and one that approximates the country border (without using the country border as a parameter in the area definition), where the UE would use the former if it has access to map data, while it would use the area definition approximating the country border if it does not have access to map data.

In some embodiments, the examples above can be made more dynamic by introducing time dependency in addition to UE location dependency for the registration area allocated to a UE. For instance, the UE may be provided with two radii, R1 and R2, where R1 < R2 and R1 is associated with a time T. Then, until time T, R1 defines the registration area, i.e. the UE can move around inside a circle with radius R1 (e.g. with the center point being the UE's location at the time of provision of the registration area configuration (or another reference point as previously described for basic embodiment 1)). After time T, R2 defines the registration area, i.e. the UE can move around inside a circle with radius R2 (e.g. with the center point being the UE's location at the time of provision of the registration area configuration (or another reference point as previously described for basic embodiment 1)). The time could be expressed in absolute time, e.g. UTC, or H-SFN1 + SFN or elapsed time since the allocation of the UE specific registration area. If the UE at any time leaves its currently valid registration area, it informs the network (e.g. sends a Registration Request NAS message or a RRCResumeRequest RRC message), preferably providing its location, and receives a new UE specific registration area configuration in return.

The above can be generalized to providing the UE with N radii, R1, R2,...RN, where R1 < R2 <...< RN, and each radius except RN is associated with a time, T1, T2,... TM, where T1 < T2 <...< TM and M = N -1. During the time t < T1, radius R1 defines the registration area, during the time T1 < t < T2, radius R2 defines the registration area and so on. When t > TM, radius RN defines the registration area. Again, the time could be expressed in absolute time, e.g. UTC, or H-SFN + SFN or elapsed time since the allocation of the UE specific registration area. Optionally, the largest radius, e.g. RN, could also be associated with a time, which when it is exceeded, triggers the UE to register, similar to periodic registration.

The above is a description of a concept of dynamic registration areas based on changing between discrete registration area definitions, e.g. circles with discretely different radii. This could be urned into a continuous time-based registration area definition, e.g. a circle with a radius that grows continuously with time. The most straightforward such time dependence is linear time dependence, i.e. $R(t) = R(0) + k \times t$, where R(0) is the radius defined to be valid initially (i.e. with t = 0), i.e. from the provision of the registration area configuration, k is a constant (k > 0) and t is the time elapsed since the UE received the registration area configuration. Optionally, this may be complemented by a maximum radius which will not be exceeded irrespective of how long time that elapses.

A time for time-based registration, similar to periodic registration, i.e. a time when the UE should register with the network, even if it has not left its registration area could also be configured. Note that the maximum radius, Rmax, and the maximum time (e.g. the time for time-based registration), Tmax, may be equivalent/interchangeable if Rmax = R(0) + k x Tmax.

As one option, the proportionality factor k, which determines the time-based growth of the registration area (when the registration area's time dependence consists of growth proportional to the elapsed time since the provision of the registration area configuration), could be based on the UE's movement speed (e.g. a greater UE speed could imply configuration of a greater proportionality factor). To support this, the UE could report its speed when it registers. Such speed/velocity dependence could be taken one step further by taking the movement direction into account (wherein the UE would report both size and direction of its current velocity), such that the allocated UE specific registration area does not have the UE at the center, but rather closer to the registration area border it is moving away from. The shape of the area could also be adapted to the movement direction. Furthermore, the registration area's time dependence (if any) may be defined such that the registration area grows more in the direction of the UE's movements. As yet another option, the registration area's time dependence could be defined such that the registration area moves in the direction of the UE's movement, possibly in addition to time-based growth and/or modification of the shape of the UE specific registration area. With the option where the UE's registration area moves as a function of time, the UE's location at the time of provision of the registration area configuration (which at that time was located inside the registration area) may, after some time, be located outside the registration area (based on extrapolation of the UE's reported velocity and the assumption that the UE at that time will have moved in the same direction as the movement of the registration area such that the UE (hopefully) is still located inside its registration area).

A circular registration area with time-based growth of the radius has been used in the examples above. However, as previously mentioned, a registration area may be assigned with essentially any shape (and other reference points than the UE's location as described for basic embodiment 1). Hence, a more general description of time-based growth of a registration area is that it is uniformly scaled based on a function of time (e.g. proportional to the elapsed time since the provision of the registration area configuration). This means that all distances in the shape area scaled in the same manner. For instance, if the registration area has the shape of a quadrate with the side length S, and linear scaling proportional to the elapsed time since the provision of the registration area configuration is used, the side length as a function of time can be expressed as $S(t) = S(0) + k \times t$. This can be generalized to any polygon, e.g. a polygon with the side lengths S1, S2, S3,... SN, wherein each side is uniformly scaled, e.g., using linear scaling, such that $Si(t) = Si(0) + k \times t$, where the index $i = \{1, 2, 3,... N\}$. In another example, where the registration area is an ellipse, uniform linear scaling means that all the distances in the ellipse, e.g. the semi-axes, are scaled in proportion to the elapsed time with the same proportionality constant.

Note also that linear growth in proportion to the elapsed time since the provision of the registration area configuration is only one example of time dependence. Growth of a registration area may be configured or specified to follow any other mathematical formula, e.g. uniform scaling based on an arbitrary function of time.

As described above, the UE may be configured to perform periodic registration, i.e. to periodically contact the network to inform it that the UE is still reachable, even if the UE is still located within its allocated registration area (and variants of such periodic registration have also been described above). During such periodic registration, the UE may provide its current location and the network may configure a new registration area for the UE or let the UE's current registration area remain valid.

When the UE is to be paged, it is the task of the network to determine which cell(s) that overlap(s) with the UE's registration area at that specific time. The network should preferably apply some margin in this determination to account for fuzzy cell borders, small differences in the UE's and the network's estimation of the elapsed time and possibly also race conditions (where the UE attempts to register outside its registration area simultaneously with the paging preparation). The network may use the same optional methods and strategies for stepwise paging, as described for basic embodiment 1.

In some embodiments, the notion of a registration area allocated to a UE is removed. Instead, the UE only reports its location to the network and then the network relies on paging with stepwise increased, or changed, paging area. For instance, when paging the UE, the network can page the UE in cells overlapping with a circular area with the UE's reported location at the center and then increase the radius of this circular area for every new paging step. Preferably, each paging step involves only cells (or beams) in which the cell has not been paged in any previous paging step (but repetition of the page in one or more cells (or beams) is not excluded). For instance, with the example of stepwise increased radius of a circular area, the inner part of the circle, in which the UE has already been paged in one or more previous paging step(s), may be excluded from the page, such that UE is paged in an area forming a hollow circle. In general, the network may use the same optional methods and strategies for stepwise paging, as described above.

The network may thus attempt to reach the UE through paging in stepwise changed areas, e.g. increasing in size.

In an extreme case, this could lead to that the network pages the UE in the entire PLMN (e.g. through accumulated paging steps), but the network may also choose to give up and determine that the UE is unreachable before having tried to page the UE in all the cells of the PLMN.

As mentioned previously, a UE may be configured to periodically register with the network (i.e. periodically send a Registration Request NAS message to the network) to inform the network that the UE is still reachable. This mechanism may advantageously be combined with other embodiments. In conjunction with the periodic registration the UE may report its current location, thereby refreshing the network's knowledge about the UE's location, which thus can be a new starting point of subsequent possible paging attempts (i.e. stepwise paging). With a suitably configured periodicity for the periodic registration, e.g. a few hours, the size of the area in which the UE can reasonably (or likely) be assumed to move between two periodic registration may be kept at a reasonable size and/or a maximum such area may be predicted or estimated with a reasonable probability.

As yet another option, the UE may complement its reported location with its velocity, e.g. both size and direction. The network may use knowledge of the UE's velocity to adapt its stepwise paging, e.g. to adapt the area of the first paging step with a bias towards the direction the UE reported to be moving, and possibly also selecting the area(s) of subsequent paging step(s) at least partly based on the direction in which the UE reported to be moving. In addition, the size of the initial paging area, as well as the size of each paging step, may be adapted to the size of the UE's reported velocity (e.g. with larger areas if the UE reported a large velocity). (See above for further details on how the UE's velocity can impact the network's choice of area/cells to page the UE in during stepwise paging).

As another option, the network may also take the UE's reported velocity into account when performing the above described estimation or prediction of the maximum area the UE may reasonably have moved within during a certain time period, e.g. the time period between two periodic registrations.

As another option, the network can update its knowledge of the UE's latest location (and optionally the UE's velocity) every time the UE is in contact with the network, irrespective of whether the purpose of the contact is periodic registration or some other purpose. To facilitate this, the UE may report its location (and optionally its velocity) when it is in contact with the network. The UE may do this on request from the network or may do it proactively, e.g. because it may previously have been configured by the network to do so, wherein the configuration may have been provided e.g. via an RRCRelease message or via broadcast system information. Optionally, the configuration may include that the UE should report its current location only if it differs from the previously reported UE location by more than a configured threshold distance. Similarly, the configuration may include that the UE should report its current velocity only if it differs from the previously reported UE velocity by more than a configured threshold difference. As yet another option, the configuration may include that the UE should report both its current location and its current velocity if either the UE's location differs from the previously reported UE location by more than a configured threshold distance or the UE's velocity differs from the previously reported UE velocity by more than a configured threshold difference.

As another option, the UE does not explicitly report its location. Instead, the UE's location in terms of the cell or beam in which it communicates with the network is recorded by the network as the UE's current location. This type of UE location recording does not require any support from the UE (e.g. in terms of reported location information), but can be derived entirely in the network itself by the network node(s) communicating with the UE, e.g. the gNB. The information may be stored in the RAN, e.g. in the gNB, and/or in the core network, e.g. in the AMF. As one option, with this coarser UE location information, when the network determines the areas/cells to page the UE in during stepwise paging, it may assume that the UE is located at a reference point in the cell or beam footprint the UE is located in, where such a reference point may represent an estimated center of the cell coverage area or the beam footprint.

Even though elimination of broadcast TAIs may serve to simplify the mechanisms for tracking of UEs in RRC_IDLE state, there are also arguments for keeping the tracking areas and the TAIs, in order to avoid, or limit, the impact on the core network functionality. In one embodiment, the core network still configures the UE with a list of tracking areas, represented by a list of TAIs, in which the UE is allowed to move around in RRC_IDLE state without informing the network of its whereabouts (except for periodic registration). When the UE leaves its configured list of TAs, i.e. its registration area, it reports this to the network using a Registration Request NAS message. To enable the UE to know when it leaves its registration area, the TAIs can be broadcast in the cells' system information. The difference from the legacy mechanism with regards to TAI broadcasting would be that the tracking areas would be fixed to geographical areas rather than cells, which results in that the TA a cell belongs to changes over time (with moving cells) and that some cells may temporarily broadcast two or even more TAIs.

During the registration procedure the gNB reports the UE's current TA and cell to the core network in the User Location Information IE in the Initial UE Message NGAP message carrying the Registration Request NAS message, just as in the legacy procedure.

Furthermore, upon registration (i.e. when sending a Registration Request NAS message), or during other contacts with the network, the UE could still (as in other herein described embodiments) report its location to the gNB with a finer granularity, e.g. in terms of GNSS derived coordinates. However, in this embodiment it is recognized that a GNSS derived position indication is more accurate than the network needs and can make use of, since the paging granularity is anyway limited to the cell level (or possibly beam level in case of a multibeam cell (see section [0123])). Therefore, and to save control signaling overhead as well as to possibly reduce the UE's location determination effort (e.g. allowing movement tracking based on internal accelerometer(s) and/or gyroscope(s) to replace GNSS measurements to a larger extent), the UE may report its location using lower accuracy and coarser information. For instance, the UE may reduce the number of bits used for the reported coordinates, either using truncation or rounding.

Even when the UE is in RRC_IDLE state, the gNB that the UE reports its location to may keep the UE's reported location information for possible later use during paging. The gNB may associate this location information with the UE's 5G-S-TMSI which is included in the optional RRC parameter ng-5G-S-TMSI (or the 9 leftmost bits of the 5G-S-TMSI which are included in the optional RRC parameter ng-5G-S-TMSI-Part2), which may be included e.g. in the RRCSetupComplete message. However, it is conceivable that the 5GC, e.g. the AMF, is configured to change the 5G-S-TMSI frequently for security reasons, which can cause problems if the gNB stores a UE's last known location information together with the UE's 5G-S-TMSI. Therefore, as an alternative to the gNB's reliance of the UE's 5G-S-TMSI (e.g. retrieved from the RRCSetupComplete message) for identification of the stored UE location information, the core network, e.g. the AMF, may provide a more permanent UE identifier to the gNB during the UE context setup procedure (e.g. in the Initial Context Setup Request NGAP message) and in a possible subsequent page request (i.e. in the Paging NGAP message).

When the UE is to be paged, the core network initiates the paging using legacy mechanisms, i.e. by sending an NGAP Paging message to one or more gNBs, indicating the TAI(s) of the tracking areas the UE should be paged in (and possibly a list of cells the paging should be limited in case of optimized stepwise paging). If the gNB has stored location information associated with the UE to be paged (as previously reported by the UE), the gNB can then utilize this location information to optimize the paging, e.g. by first paging the UE in the cell(s) or beam(s) that cover(s) the UE's last reported location and page the UE in surrounding areas (i.e. cells or beams) only when needed. As an option, if the core network (AMF) is aware of the UE coordinates (e.g. from a recent positioning procedure), the AMF may provide the UE coordinates to the gNB in the NGAP Paging message.

To capture the above, as a further option, a new state may be introduced (in addition to the RRC_IDLE, RRC_INACTIVE and RRC_CONNECTED states), wherein the UE reports is location during all contacts with the network, during selected (specified or configured) contacts with the network, or only during the RRC connection establishment procedure, and the gNB may store state information associated with a UE, such as location information, while the core network regards the UE as being in RM-REGISTERED/5GMM-REGISTERED and CM-IDLE/5GMM-IDLE state (or in new states with similar properties).

Beam-wise paging

The scope of 3GPP's standardization work for NTN includes both the scenario where a cell is covered by a single satellite beam and the scenario where a cell is covered by multiple satellite beams. When the proposed solution described herein is applied in the latter scenario, the network may choose to page the UE in a subset of the beams in a cell in order to better match the UE specific registration area definition, or to further optimize stepwise paging by utilizing the finer granularity in the areas in which the UE is paged that can be applied when the beam level is utilized rather than just the cell level. To facilitate this, in NTN there may no longer be a requirement to repeat the paging in all beams of the cell.

Relaxed UE location accuracy

Frequent GNSS measurements to determine a UE's location implies nonnegligible energy consumption in the UE. An option to reduce the energy consumed through GNSS measurements is to relax the requirements on the accuracy of the UE's location (e.g. when the UE's location is used as proposed in the embodiments of the proposed solution). For instance, the acceptable age of a GNSS measurement may be increased. This will save energy at the expense of the accuracy of the UE location information. As a further option, in between GNSS measurements, the UE may keep track of its movements (and thus change of location) based on internal sensors, such as accelerometer(s) and/or gyroscope(s), and may be allowed to rely on such sensors, at the expense of reduced accuracy of the location information.

The network may compensate for poorer UE location information accuracy by applying a margin in the set of cell(s) (or beams) chosen for paging. On the other hand, even with relaxed UL location information accuracy, the resulting uncertainty area (i.e. the area in which the UE is estimated to be located within, based on the location information with reduced accuracy) will in practice be much smaller than the coverage area of a cell or a beam (i.e. a beam footprint). Hence, the needed compensating margin may be negligible and may in practice not be needed at all.

As an option, the location tracking accuracy requirement may be based on a UE capability, e.g. taking the UE's energy source or battery capacity into account (wherein this may be signaled to the network together with other capability information). It could even be made more dynamic, such that the UE informs the network of its battery status (e.g. assumed remaining battery lifetime, possibly associated with a recommended/requested location tracking accuracy requirement) and the network configures the location tracking accuracy requirement e.g. prior to or in conjunction with the registration area allocation.

As an option, the UE provides its location information e.g., during initial registration, periodic registration or when requesting registration with mobility update, and the network responds with an associated time and a registration area which may be indicated with any shape, e.g., a rotationally symmetric area such as a circle, a quadratic or an elliptical shape with the UE's location at the center, the serving cell's center at the center or any other reference point at the center of the area at the time of allocation. The time associated with the registration area can be expressed in absolute time, e.g., UTC, or (H-SFN1 + SFN) or elapsed time since the allocation of UE specific registration area. Once the allocation of the registration area is completed, the UE may start a timer in accordance with the associated time. In order to reduce the energy consumption from GNSS measurements, the UE may not need to check whether it is still located in the allocated registration area when it wakes up until the timer expires. When the timer expires, the UE checks its location and requests an update of the registration area if it is not in the allocated registration area anymore. For example, if the allocated registration area is a circle with a radius R where the UE's location at the time of allocation is at the center, the UE may perform GNSS measurements only after the timer expires and requests an update of the registration area if its location is further away than R from the UE's location when registration area allocation took place.

Broadcasting of TAIs

Although a feature of the embodiments presented herein is that reliance of broadcasting of TAIs can be eliminated, thereby potentially avoiding some of the complexity with the tracking area management and UE location tracking, it would still be possible to broadcast TAIs in the cells in combination with the previously described embodiments. This could for instance serve to facilitate other features, such as area restrictions or policy based area specific features or services. Another option is that the gNB provides TAI information to the core network, even if the gNB does not broadcast TAIs over the radio interface. The gNB could e.g. map its knowledge about the UE's location to a TAI that is provided to the core network (e.g. the AMF). This would allow the core network (e.g. the AMF) to know the UE's current TAI and use it with e.g. area restrictions and policy areas.

**Figure** 5 is a flow diagram depicts a method in accordance with some embodiments performed by a wireless device (WD) 100 and a network node (NN) 200 in a wireless communication network 50. As shown therein, at step 502, the WD 100 obtains geographic location associated with the wireless device 100, such as by using a global navigation satellite system. For example, the geographic location associated with the wireless device 100 may include coordinates, or approximate coordinates, of the geographic location of the WD 100.

At step 504, the WD 100 provides the **NN** 200 with geographic location information describing the location of the WD 100. The geographic location information describing the location of the WD 100 may include geographic coordinates, or approximate coordinates, of the WD 100. The **NN** 200 may be a base station, an AMG, and MME, or any other node of a wireless communication network involved in paging. The location information may be provided explicitly or implicitly. For example, the WD 100 may explicitly provide its location by sending a location report or including its location information in a message sent to the **NN** 200. As another example, the **NN** 200 may obtain the location implicitly based on a cell or beam with which the WD 100 uses to communicate with the **NN** 200. In some embodiments, the location information may also include information related to the **NN** 200 paging the WD 100 (e.g., information about the beams used at the location to page the WD 100). In some embodiments, the location information is provided with less accuracy than what the wireless device is capable of determining. For example, fewer bits may be used when sending the location information than are available to the WD 100.

At step 506, the WD 100 may optionally provide the **NN** 200 with additional information relating to a status of the WD 100. This information may be sent along with the location information in step 504, or it may be sent separately to the **NN** 200. The additional information may include status information about the WD 100, such as the remaining charge or battery status of the WD 100, the velocity of the WD 100, the direction in which the WD 100 is traveling, etc. This may be used by the **NN** 200 to determine the area in which the WD 100 can move. For example, a fast-moving WD 100 may be assigned a larger geographic area in which to move than a stationary WD 100. A WD 100 moving south, may be assigned a geographic area in which to move area with more distance to the south than the north with respect to the WD's 100 current location.

At step 510, the **NN** 200 optionally determines a cell of the wireless communication network covering the WD 100. At step 512, the **NN** 200 optionally identifies one or more additional cells neighbouring the cell covering the WD 100. The additional cells may be identified to help with any inaccuracies in location, the inherent blurriness of cell borders, etc.

The **NN** 200 may determine the cell covering the location of the WD 100 by mapping the area in which the WD 100 can move to a set of cells or virtual cells which currently overlap with the location of the WD 100. The identified cell, or cells, can then be used when trying to page the WD 100.

At step 514, the **NN** 200 optionally provides the WD 100 with a geographic area in which the WD 100 can move without informing the wireless communication network of its location. The WD 100 is of course free to move outside of the area, but when it does it should update its location to the wireless communication network.

The area in which the first wireless device can move can be any shape. For example, it could be a circle, an ellipse, a polygon, a shape specified by 3GPP in 3GPP TS 23.032 "Geographical Area Description (GAD), a shape based at least in part on a country's border, etc. In some embodiments, the **NN** 200 may provide the WD 100 with additional information about how the area within which it can move without updating its location to the network may change over time. For example, the radius of the area within which it can move without updating its location to the network may grow with time. This may be a discrete or continuous change.

At step 516, the WD 100 optionally tracks its movements. This may be done throughout the steps illustrated herein, but for purposes of simplicity is shown here. Depending on the capabilities of the WD 100, this may include using GPS type location tracking or it may include using internal sensors, such as gyroscopes and accelerometers to track the movement of the WD 100.

At step 518, the NN 200 transmits a paging message to the WD 100 within the cell based on the geographic location information provided by the WD 100. In some embodiments, the WD 100 may be paged in an area that is smaller than the geographic area within which the WD 100 was allowed to move without updating its location to the wireless communication network. The paging area may then be increased if the initial paging attempt was unsuccessful. The increase in paging area may be done in a stepwise manner.

Depending on the embodiment, the steps above may be performed with or without the WD 100 being provided with a list of tracking areas.

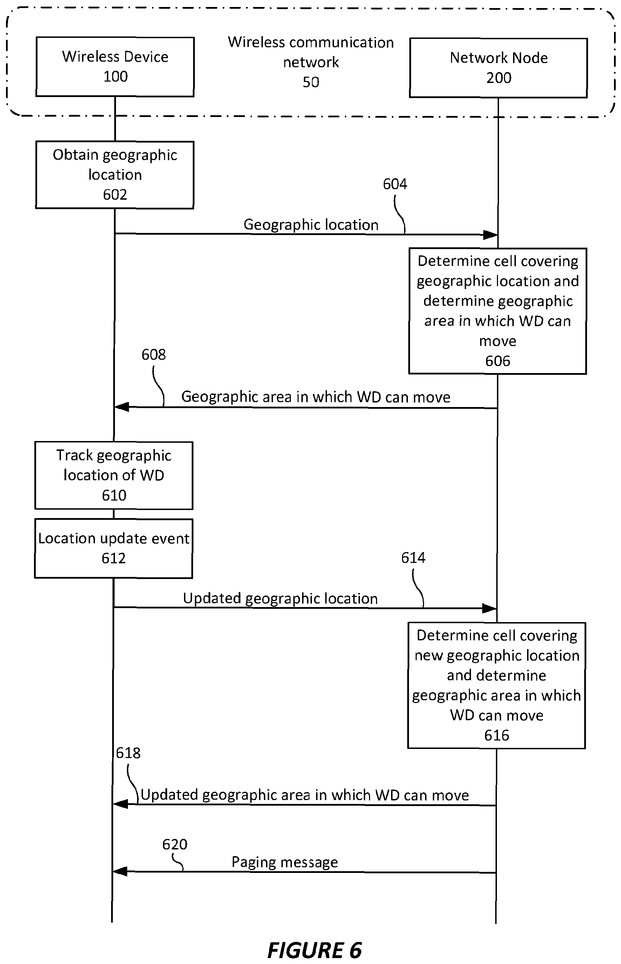

Operations of a WD 100 and a NN 200 in a wireless communication network 50 according to further embodiments are illustrated in **Figure 6.** Referring to **Figure 6,** a WD 100 obtains a geographic location associated with the WD 100 at step 602, and transmits the geographic location to a NN 200 at step 604.

At step 606, the NN 200 determines a cell covering the geographic location associated with the WD 100 and determines a geographic area in which the WD 100 is allowed to move without updating its location to the wireless communication network 50.

At step 608, the NN 200 transmits an indication of the geographic area to the WD 100.

At step 610, the WD 100 tracks its movements to keep track of its geographic location.

Upon the occurrence of a location update event at step 612, the WD 100 sends updated geographic location information to the NN 200 at step 614.

The location update event may include for example, when the WD 100 leaves the geographic area within it can move without updating the wireless communication network 50, at a specific time (e.g., expiration of a timer, an absolute time, etc.), upon the occurrence of a triggering event (e.g., crossing a national border, detecting a signal from a new cell, etc.), on a periodic basis (e.g., every X seconds), when the WD 100 has moved a threshold distance from last provided location.

At step 616, the NN 200 determines a cell covering the updated geographic location associated with the WD 100 and determines an updated geographic area in which the WD 100 is allowed to move without updating its location to the wireless communication network 50.

At step 618, the NN 200 transmits an indication of the updated geographic area to the WD 100.

At step 620, the NN 100 transmits a paging message to the WD 100 within the updated geographic area. In some embodiments, the WD may be paged in an area that is smaller than the area within which the WD 100 was allowed to move. The paging area may then be increased if the initial paging attempt is unsuccessful.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

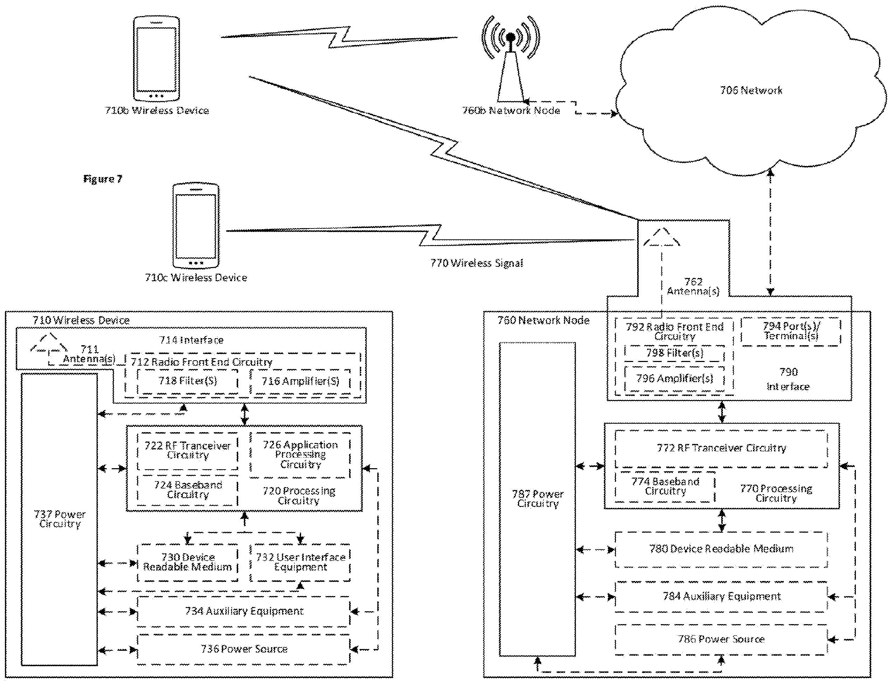

Although the subject matter described herein may be implemented in any appropriate type of system using any suitable components, the embodiments disclosed herein are described in relation to a wireless network, such as the example wireless network illustrated in **Figure 7.** For simplicity, the wireless network of **Figure 7** only depicts network 706, network nodes 760 and 760b, and WDs 710, 710b, and 710c. In practice, a wireless network may further include any additional elements suitable to support communication between wireless devices or between a wireless device and another communication device, such as a landline telephone, a service provider, or any other network node or end device. Of the illustrated components, network node 760 and wireless device (WD) 710 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 706 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 760 and WD 710 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In **Figure 7,** network node 760 includes processing circuitry 770, device readable medium 780, interface 790, auxiliary equipment 784, power source 786, power circuitry 787, and antenna 762. Although network node 760 illustrated in the example wireless network of **Figure 7** may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 760 are depicted as single boxes located within a larger box, or nested within multiple boxes, in practice, a network node may comprise multiple different physical components that make up a single illustrated component (e.g., device readable medium 780 may comprise multiple separate hard drives as well as multiple RAM modules).

Similarly, network node 760 may be composed of multiple physically separate components (e.g., a NodeB component and a RNC component, or a BTS component and a BSC component, etc.), which may each have their own respective components. In certain scenarios in which network node 760 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 760 may be configured to support multiple radio access technologies (RATs). In such embodiments, some components may be duplicated (e.g., separate device readable medium 780 for the different RATs) and some components may be reused (e.g., the same antenna 762 may be shared by the RATs). Network node 760 may also include multiple sets of the various illustrated components for different wireless technologies integrated into network node 760, such as, for example, GSM, WCDMA, LTE, NR, WiFi, or Bluetooth wireless technologies. These wireless technologies may be integrated into the same or different chip or set of chips and other components within network node 760.

Processing circuitry 770 is configured to perform any determining, calculating, or similar operations (e.g., certain obtaining operations) described herein as being provided by a network node. These operations performed by processing circuitry 770 may include processing information obtained by processing circuitry 770 by, for example, converting the obtained information into other information, comparing the obtained information or converted information to information stored in the network node, and/or performing one or more operations based on the obtained information or converted information, and as a result of said processing making a determination.

Processing circuitry 770 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 760 components, such as device readable medium 780, network node 760 functionality. For example, processing circuitry 770 may execute instructions stored in device readable medium 780 or in memory within processing circuitry 770. Such functionality may include providing any of the various wireless features, functions, or benefits discussed herein. In some embodiments, processing circuitry 770 may include a system on a chip (SOC).

In some embodiments, processing circuitry 770 may include one or more of radio frequency (RF) transceiver circuitry 772 and baseband processing circuitry 774. In some embodiments, radio frequency (RF) transceiver circuitry 772 and baseband processing circuitry 774 may be on separate chips (or sets of chips), boards, or units, such as radio units and digital units. In alternative embodiments, part or all of RF transceiver circuitry 772 and baseband processing circuitry 774 may be on the same chip or set of chips, boards, or units

In certain embodiments, some or all of the functionality described herein as being provided by a network node, base station, eNB or other such network device may be performed by processing circuitry 770 executing instructions stored on device readable medium 780 or memory within processing circuitry 770. In alternative embodiments, some or all of the functionality may be provided by processing circuitry 770 without executing instructions stored on a separate or discrete device readable medium, such as in a hard-wired manner. In any of those embodiments, whether executing instructions stored on a device readable storage medium or not, processing circuitry 770 can be configured to perform the described functionality. The benefits provided by such functionality are not limited to processing circuitry 770 alone or to other components of network node 760, but are enjoyed by network node 760 as a whole, and/or by end users and the wireless network generally.

Device readable medium 780 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 770. Device readable medium 780 may store any suitable instructions, data or information, including a computer program, software, an application including one or more of logic, rules, code, tables, etc. and/or other instructions capable of being executed by processing circuitry 770 and, utilized by network node 760. Device readable medium 780 may be used to store any calculations made by processing circuitry 770 and/or any data received via interface 790. In some embodiments, processing circuitry 770 and device readable medium 780 may be considered to be integrated.

Interface 790 is used in the wired or wireless communication of signalling and/or data between network node 760, network 706, and/or WDs 710. As illustrated, interface 790 comprises port(s)/terminal(s) 794 to send and receive data, for example to and from network 706 over a wired connection. Interface 790 also includes radio front end circuitry 792 that may be coupled to, or in certain embodiments a part of, antenna 762. Radio front end circuitry 792 comprises filters 798 and amplifiers 796. Radio front end circuitry 792 may be connected to antenna 762 and processing circuitry 770. Radio front end circuitry may be configured to condition signals communicated between antenna 762 and processing circuitry 770. Radio front end circuitry 792 may receive digital data that is to be sent out to other network nodes or WDs via a wireless connection. Radio front end circuitry 792 may convert the digital data into a radio signal having the appropriate channel and bandwidth parameters using a combination of filters 798 and/or amplifiers 796. The radio signal may then be transmitted via antenna 762. Similarly, when receiving data, antenna 762 may collect radio signals which are then converted into digital data by radio front end circuitry 792. The digital data may be passed to processing circuitry 770. In other embodiments, the interface may comprise different components and/or different combinations of components.

In certain alternative embodiments, network node 760 may not include separate radio front end circuitry 792, instead, processing circuitry 770 may comprise radio front end circuitry and may be connected to antenna 762 without separate radio front end circuitry 792. Similarly, in some embodiments, all or some of RF transceiver circuitry 772 may be considered a part of interface 790. In still other embodiments, interface 790 may include one or more ports or terminals 794, radio front end circuitry 792, and RF transceiver circuitry 772, as part of a radio unit (not shown), and interface 790 may communicate with baseband processing circuitry 774, which is part of a digital unit (not shown).

Antenna 762 may include one or more antennas, or antenna arrays, configured to send and/or receive wireless signals. Antenna 762 may be coupled to radio front end circuitry 790 and may be any type of antenna capable of transmitting and receiving data and/or signals wirelessly. In some embodiments, antenna 762 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 762 may be separate from network node 760 and may be connectable to network node 760 through an interface or port.

Antenna 762, interface 790, and/or processing circuitry 770 may be configured to perform any receiving operations and/or certain obtaining operations described herein as being performed by a network node. Any information, data and/or signals may be received from a wireless device, another network node and/or any other network equipment. Similarly, antenna 762, interface 790, and/or processing circuitry 770 may be configured to perform any transmitting operations described herein as being performed by a network node. Any information, data and/or signals may be transmitted to a wireless device, another network node and/or any other network equipment.

Power circuitry 787 may comprise, or be coupled to, power management circuitry and is configured to supply the components of network node 760 with power for performing the functionality described herein. Power circuitry 787 may receive power from power source 786. Power source 786 and/or power circuitry 787 may be configured to provide power to the various components of network node 760 in a form suitable for the respective components (e.g., at a voltage and current level needed for each respective component). Power source 786 may either be included in, or external to, power circuitry 787 and/or network node 760. For example, network node 760 may be connectable to an external power source (e.g., an electricity outlet) via an input circuitry or interface such as an electrical cable, whereby the external power source supplies power to power circuitry 787. As a further example, power source 786 may comprise a source of power in the form of a battery or battery pack which is connected to, or integrated in, power circuitry 787. The battery may provide backup power should the external power source fail. Other types of power sources, such as photovoltaic devices, may also be used.

Alternative embodiments of network node 760 may include additional components beyond those shown in **Figure** 7 that may be responsible for providing certain aspects of the network node's functionality, including any of the functionality described herein and/or any functionality necessary to support the subject matter described herein. For example, network node 760 may include user interface equipment to allow input of information into network node 760 and to allow output of information from network node 760. This may allow a user to perform diagnostic, maintenance, repair, and other administrative functions for network node 760.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehiclemounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 710 includes antenna 711, interface 714, processing circuitry 720, device readable medium 730, user interface equipment 732, auxiliary equipment 734, power source 736 and power circuitry 737. WD 710 may include multiple sets of one or more of the illustrated components for different wireless technologies supported by WD 710, such as, for example, GSM, WCDMA, LTE, NR, WiFi, WiMAX, or Bluetooth wireless technologies, just to mention a few. These wireless technologies may be integrated into the same or different chips or set of chips as other components within WD 710.

Antenna 711 may include one or more antennas or antenna arrays, configured to send and/or receive wireless signals, and is connected to interface 714. In certain alternative embodiments, antenna 711 may be separate from WD 710 and be connectable to WD 710 through an interface or port. Antenna 711, interface 714, and/or processing circuitry 720 may be configured to perform any receiving or transmitting operations described herein as being performed by a WD. Any information, data and/or signals may be received from a network node and/or another WD. In some embodiments, radio front end circuitry and/or antenna 711 may be considered an interface.

As illustrated, interface 714 comprises radio front end circuitry 712 and antenna 711. Radio front end circuitry 712 comprise one or more filters 718 and amplifiers 716. Radio front end circuitry 714 is connected to antenna 711 and processing circuitry 720, and is configured to condition signals communicated between antenna 711 and processing circuitry 720. Radio front end circuitry 712 may be coupled to or a part of antenna 711. In some embodiments, WD 710 may not include separate radio front end circuitry 712; rather, processing circuitry 720 may comprise radio front end circuitry and may be connected to antenna 711. Similarly, in some embodiments, some or all of RF transceiver circuitry 722 may be considered a part of interface 714. Radio front end circuitry 712 may receive digital data that is to be sent out to other network nodes or WDs via a wireless connection. Radio front end circuitry 712 may convert the digital data into a radio signal having the appropriate channel and bandwidth parameters using a combination of filters 718 and/or amplifiers 716. The radio signal may then be transmitted via antenna 711. Similarly, when receiving data, antenna 711 may collect radio signals which are then converted into digital data by radio front end circuitry 712. The digital data may be passed to processing circuitry 720. In other embodiments, the interface may comprise different components and/or different combinations of components.

Processing circuitry 720 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 710 components, such as device readable medium 730, WD 710 functionality. Such functionality may include providing any of the various wireless features or benefits discussed herein. For example, processing circuitry 720 may execute instructions stored in device readable medium 730 or in memory within processing circuitry 720 to provide the functionality disclosed herein.

As illustrated, processing circuitry 720 includes one or more of RF transceiver circuitry 722, baseband processing circuitry 724, and application processing circuitry 726. In other embodiments, the processing circuitry may comprise different components and/or different combinations of components. In certain embodiments processing circuitry 720 of WD 710 may comprise a SOC. In some embodiments, RF transceiver circuitry 722, baseband processing circuitry 724, and application processing circuitry 726 may be on separate chips or sets of chips. In alternative embodiments, part or all of baseband processing circuitry 724 and application processing circuitry 726 may be combined into one chip or set of chips, and RF transceiver circuitry 722 may be on a separate chip or set of chips. In still alternative embodiments, part or all of RF transceiver circuitry 722 and baseband processing circuitry 724 may be on the same chip or set of chips, and application processing circuitry 726 may be on a separate chip or set of chips. In yet other alternative embodiments, part or all of RF transceiver circuitry 722, baseband processing circuitry 724, and application processing circuitry 726 may be combined in the same chip or set of chips. In some embodiments, RF transceiver circuitry 722 may be a part of interface 714. RF transceiver circuitry 722 may condition RF signals for processing circuitry 720.

In certain embodiments, some or all of the functionality described herein as being performed by a WD may be provided by processing circuitry 720 executing instructions stored on device readable medium 730, which in certain embodiments may be a computer-readable storage medium. In alternative embodiments, some or all of the functionality may be provided by processing circuitry 720 without executing instructions stored on a separate or discrete device readable storage medium, such as in a hard-wired manner. In any of those particular embodiments, whether executing instructions stored on a device readable storage medium or not, processing circuitry 720 can be configured to perform the described functionality. The benefits provided by such functionality are not limited to processing circuitry 720 alone or to other components of WD 710, but are enjoyed by WD 710 as a whole, and/or by end users and the wireless network generally.

Processing circuitry 720 may be configured to perform any determining, calculating, or similar operations (e.g., certain obtaining operations) described herein as being performed by a WD. These operations, as performed by processing circuitry 720, may include processing information obtained by processing circuitry 720 by, for example, converting the obtained information into other information, comparing the obtained information or converted information to information stored by WD 710, and/or performing one or more operations based on the obtained information or converted information, and as a result of said processing making a determination.

Device readable medium 730 may be operable to store a computer program, software, an application including one or more of logic, rules, code, tables, etc. and/or other instructions capable of being executed by processing circuitry 720. Device readable medium 730 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 720. In some embodiments, processing circuitry 720 and device readable medium 730 may be considered to be integrated.

User interface equipment 732 may provide components that allow for a human user to interact with WD 710. Such interaction may be of many forms, such as visual, audial, tactile, etc. User interface equipment 732 may be operable to produce output to the user and to allow the user to provide input to WD 710. The type of interaction may vary depending on the type of user interface equipment 732 installed in WD 710. For example, if WD 710 is a smart phone, the interaction may be via a touch screen; if WD 710 is a smart meter, the interaction may be through a screen that provides usage (e.g., the number of gallons used) or a speaker that provides an audible alert (e.g., if smoke is detected). User interface equipment 732 may include input interfaces, devices and circuits, and output interfaces, devices and circuits. User interface equipment 732 is configured to allow input of information into WD 710, and is connected to processing circuitry 720 to allow processing circuitry 720 to process the input information. User interface equipment 732 may include, for example, a microphone, a proximity or other sensor, keys/buttons, a touch display, one or more cameras, a USB port, or other input circuitry. User interface equipment 732 is also configured to allow output of information from WD 710, and to allow processing circuitry 720 to output information from WD 710. User interface equipment 732 may include, for example, a speaker, a display, vibrating circuitry, a USB port, a headphone interface, or other output circuitry. Using one or more input and output interfaces, devices, and circuits, of user interface equipment 732, WD 710 may communicate with end users and/or the wireless network, and allow them to benefit from the functionality described herein.

Auxiliary equipment 734 is operable to provide more specific functionality which may not be generally performed by WDs. This may comprise specialized sensors for doing measurements for various purposes, interfaces for additional types of communication such as wired communications etc. The inclusion and type of components of auxiliary equipment 734 may vary depending on the embodiment and/or scenario.

Power source 736 may, in some embodiments, be in the form of a battery or battery pack. Other types of power sources, such as an external power source (e.g., an electricity outlet), photovoltaic devices or power cells, may also be used. WD 710 may further comprise power circuitry 737 for delivering power from power source 736 to the various parts of WD 710 which need power from power source 736 to carry out any functionality described or indicated herein. Power circuitry 737 may in certain embodiments comprise power management circuitry. Power circuitry 737 may additionally or alternatively be operable to receive power from an external power source; in which case WD 710 may be connectable to the external power source (such as an electricity outlet) via input circuitry or an interface such as an electrical power cable. Power circuitry 737 may also in certain embodiments be operable to deliver power from an external power source to power source 736. This may be, for example, for the charging of power source 736. Power circuitry 737 may perform any formatting, converting, or other modification to the power from power source 736 to make the power suitable for the respective components of WD 710 to which power is supplied.

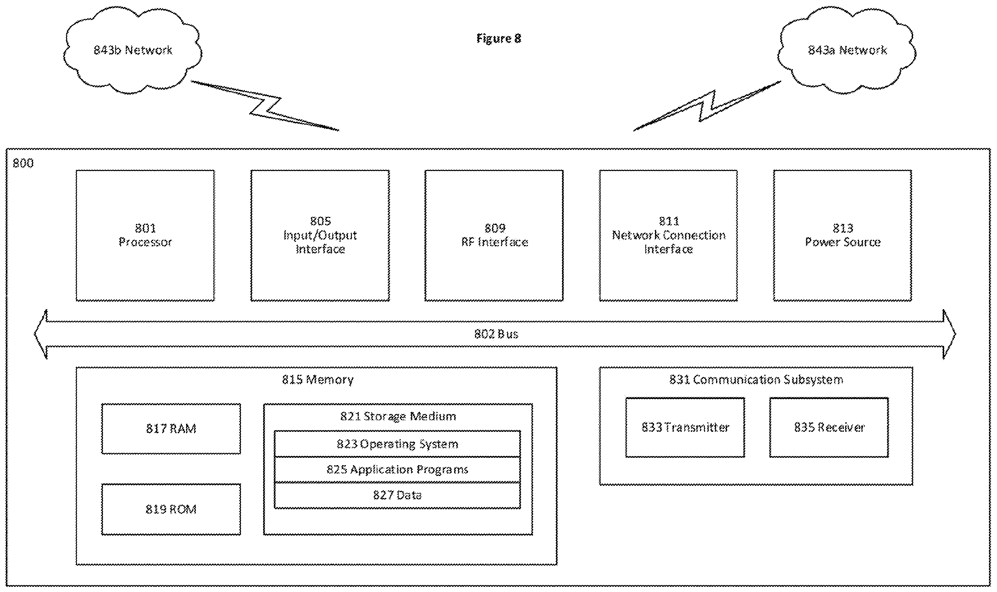

**Figure** 8 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 8200 may be any UE identified by the 3rd Generation Partnership Project (3GPP), including a NB-IoT UE, a machine type communication (MTC) UE, and/or an enhanced MTC (eMTC) UE. UE 800, as illustrated in **Figure 8,** is one example of a WD configured for communication in accordance with one or more communication standards promulgated by the 3rd Generation Partnership Project (3GPP), such as 3GPP's GSM, UMTS, LTE, and/or 5G standards. As mentioned previously, the term WD and UE may be used interchangeable. Accordingly, although **Figure** 8 is a UE, the components discussed herein are equally applicable to a WD, and vice-versa.

In **Figure 8,** UE 800 includes processing circuitry 801 that is operatively coupled to input/output interface 805, radio frequency (RF) interface 809, network connection interface 811, memory 815 including random access memory (RAM) 817, read-only memory (ROM) 819, and storage medium 821 or the like, communication subsystem 831, power source 833, and/or any other component, or any combination thereof. Storage medium 821 includes operating system 823, application program 825, and data 827. In other embodiments, storage medium 821 may include other similar types of information. Certain UEs may utilize all of the components shown in **Figure 8,** or only a subset of the components. The level of integration between the components may vary from one UE to another UE. Further, certain UEs may contain multiple instances of a component, such as multiple processors, memories, transceivers, transmitters, receivers, etc.

In **Figure 8,** processing circuitry 801 may be configured to process computer instructions and data. Processing circuitry 801 may be configured to implement any sequential state machine operative to execute machine instructions stored as machinereadable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 801 may include two central processing units (CPUs). Data may be information in a form suitable for use by a computer.

In the depicted embodiment, input/output interface 805 may be configured to provide a communication interface to an input device, output device, or input and output device. UE 800 may be configured to use an output device via input/output interface 805. An output device may use the same type of interface port as an input device. For example, a USB port may be used to provide input to and output from UE 800. The output device may be a speaker, a sound card, a video card, a display, a monitor, a printer, an actuator, an emitter, a smartcard, another output device, or any combination thereof. UE 800 may be configured to use an input device via input/output interface 805 to allow a user to capture information into UE 800. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In **Figure 8,** RF interface 809 may be configured to provide a communication interface to RF components such as a transmitter, a receiver, and an antenna. Network connection interface 811 may be configured to provide a communication interface to network 843a. Network 843a may encompass wired and/or wireless networks such as a local-area network (LAN), a wide-area network (WAN), a computer network, a wireless network, a telecommunications network, another like network or any combination thereof. For example, network 843a may comprise a Wi-Fi network. Network connection interface 811 may be configured to include a receiver and a transmitter interface used to communicate with one or more other devices over a communication network according to one or more communication protocols, such as Ethernet, TCP/IP, SONET, ATM, or the like. Network connection interface 811 may implement receiver and transmitter functionality appropriate to the communication network links (e.g., optical, electrical, and the like). The transmitter and receiver functions may share circuit components, software or firmware, or alternatively may be implemented separately.

RAM 817 may be configured to interface via bus 802 to processing circuitry 801 to provide storage or caching of data or computer instructions during the execution of software programs such as the operating system, application programs, and device drivers. ROM 819 may be configured to provide computer instructions or data to processing circuitry 801. For example, ROM 819 may be configured to store invariant lowlevel system code or data for basic system functions such as basic input and output (I/O), startup, or reception of keystrokes from a keyboard that are stored in a non-volatile memory. Storage medium 821 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 821 may be configured to include operating system 823, application program 825 such as a web browser application, a widget or gadget engine or another application, and data file 827. Storage medium 821 may store, for use by UE 800, any of a variety of various operating systems or combinations of operating systems.

Storage medium 821 may be configured to include a number of physical drive units, such as redundant array of independent disks (RAID), floppy disk drive, flash memory, USB flash drive, external hard disk drive, thumb drive, pen drive, key drive, highdensity digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 821 may allow UE 800 to access computer-executable instructions, application programs or the like, stored on transitory or non-transitory memory media, to offload data, or to upload data. An article of manufacture, such as one utilizing a communication system may be tangibly embodied in storage medium 821, which may comprise a device readable medium.

In **Figure 8,** processing circuitry 801 may be configured to communicate with network 843b using communication subsystem 831. Network 843a and network 843b may be the same network or networks or different network or networks. Communication subsystem 831 may be configured to include one or more transceivers used to communicate with network 843b. For example, communication subsystem 831 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter 833 and/or receiver 835 to implement transmitter or receiver functionality, respectively, appropriate to the RAN links (e.g., frequency allocations and the like). Further, transmitter 833 and receiver 835 of each transceiver may share circuit components, software or firmware, or alternatively may be implemented separately.

In the illustrated embodiment, the communication functions of communication subsystem 831 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 831 may include cellular communication, Wi-Fi communication, Bluetooth communication, and GPS communication. Network 843b may encompass wired and/or wireless networks such as a local-area network (LAN), a wide-area network (WAN), a computer network, a wireless network, a telecommunications network, another like network or any combination thereof. For example, network 843b may be a cellular network, a Wi-Fi network, and/or a near-field network. Power source 813 may be configured to provide alternating current (AC) or direct current (DC) power to components of UE 800.

The features, benefits and/or functions described herein may be implemented in one of the components of UE 800 or partitioned across multiple components of UE 800. Further, the features, benefits, and/or functions described herein may be implemented in any combination of hardware, software or firmware. In one example, communication subsystem 831 may be configured to include any of the components described herein. Further, processing circuitry 801 may be configured to communicate with any of such components over bus 802. In another example, any of such components may be represented by program instructions stored in memory that when executed by processing circuitry 801 perform the corresponding functions described herein. In another example, the functionality of any of such components may be partitioned between processing circuitry 801 and communication subsystem 831. In another example, the non-computationally intensive functions of any of such components may be implemented in software or firmware and the computationally intensive functions may be implemented in hardware.

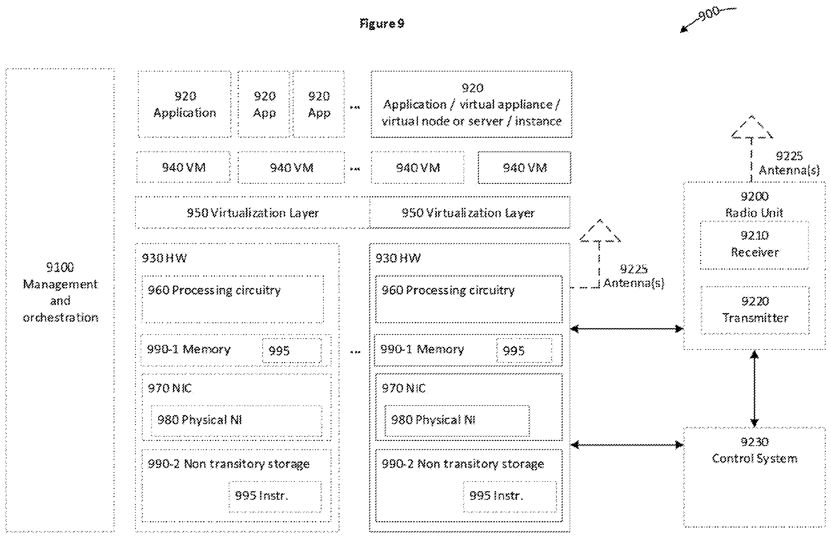

**Figure** 9 is a schematic block diagram illustrating a virtualization environment 900 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 900 hosted by one or more of hardware nodes 930. Further, in embodiments in which the virtual node is not a radio access node or does not require radio connectivity (e.g., a core network node), then the network node may be entirely virtualized.

The functions may be implemented by one or more applications 920 (which may alternatively be called software instances, virtual appliances, network functions, virtual nodes, virtual network functions, etc.) operative to implement some of the features, functions, and/or benefits of some of the embodiments disclosed herein. Applications 920 are run in virtualization environment 900 which provides hardware 930 comprising processing circuitry 960 and memory 990. Memory 990 contains instructions 995 executable by processing circuitry 960 whereby application 920 is operative to provide one or more of the features, benefits, and/or functions disclosed herein.

Virtualization environment 900, comprises general-purpose or special-purpose network hardware devices 930 comprising a set of one or more processors or processing circuitry 960, which may be commercial off-the-shelf (COTS) processors, dedicated Application Specific Integrated Circuits (ASICs), or any other type of processing circuitry including digital or analog hardware components or special purpose processors. Each hardware device may comprise memory 990-1 which may be non-persistent memory for temporarily storing instructions 995 or software executed by processing circuitry 960. Each hardware device may comprise one or more network interface controllers (NICs) 970, also known as network interface cards, which include physical network interface 980. Each hardware device may also include non-transitory, persistent, machine-readable storage media 990-2 having stored therein software 995 and/or instructions executable by processing circuitry 960. Software 995 may include any type of software including software for instantiating one or more virtualization layers 950 (also referred to as hypervisors), software to execute virtual machines 940 as well as software allowing it to execute functions, features and/or benefits described in relation with some embodiments described herein.

Virtual machines 940, comprise virtual processing, virtual memory, virtual networking or interface and virtual storage, and may be run by a corresponding virtualization layer 950 or hypervisor. Different embodiments of the instance of virtual appliance 920 may be implemented on one or more of virtual machines 940, and the implementations may be made in different ways.

During operation, processing circuitry 960 executes software 995 to instantiate the hypervisor or virtualization layer 950, which may sometimes be referred to as a virtual machine monitor (VMM). Virtualization layer 950 may present a virtual operating platform that appears like networking hardware to virtual machine 940.

As shown in **Figure 9**, hardware 930 may be a standalone network node with generic or specific components. Hardware 930 may comprise antenna 9225 and may implement some functions via virtualization. Alternatively, hardware 930 may be part of a larger cluster of hardware (e.g. such as in a data center or customer premise equipment (CPE)) where many hardware nodes work together and are managed via management and orchestration (MANO) 9100, which, among others, oversees lifecycle management of applications 920.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 940 may be a software implementation of a physical machine that runs programs as if they were executing on a physical, non-virtualized machine. Each of virtual machines 940, and that part of hardware 930 that executes that virtual machine, be it hardware dedicated to that virtual machine and/or hardware shared by that virtual machine with others of the virtual machines 940, forms a separate virtual network elements (VNE).

Still in the context of NFV, Virtual Network Function (VNF) is responsible for handling specific network functions that run in one or more virtual machines 940 on top of hardware networking infrastructure 930 and corresponds to application 920 in **Figure 9.**

In some embodiments, one or more radio units 9200 that each include one or more transmitters 9220 and one or more receivers 9210 may be coupled to one or more antennas 9225. Radio units 9200 may communicate directly with hardware nodes 930 via one or more appropriate network interfaces and may be used in combination with the virtual components to provide a virtual node with radio capabilities, such as a radio access node or a base station.

In some embodiments, some signalling can be effected with the use of control system 9230 which may alternatively be used for communication between the hardware nodes 930 and radio units 9200.

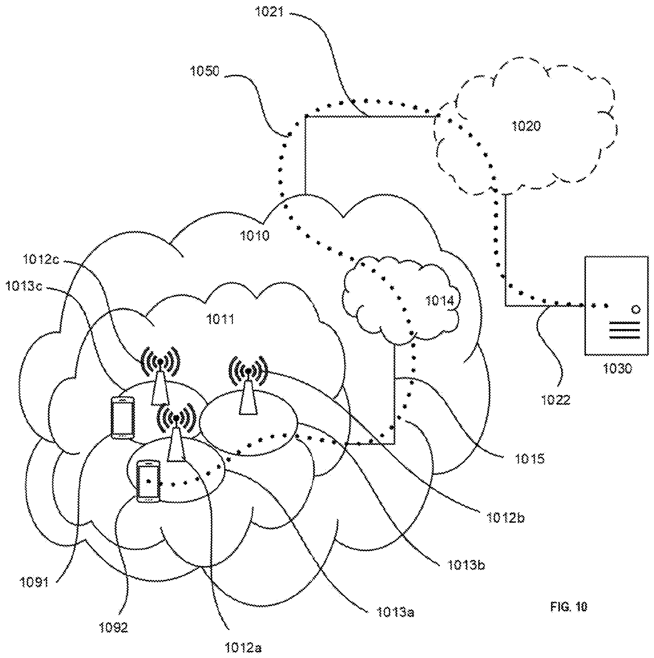

With reference to **Figure 10**, in accordance with an embodiment, a communication system includes telecommunication network 1010, such as a 3GPP-type cellular network, which comprises access network 1011, such as a radio access network, and core network 1014. Access network 1011 comprises a plurality of base stations 1012a, 1012b, 1012c, such as NBs, eNBs, gNBs or other types of wireless access points, each defining a corresponding coverage area 1013a, 1013b, 1013c. Each base station 1012a, 1012b, 1012c is connectable to core network 1014 over a wired or wireless connection 1015. A first UE 1091 located in coverage area 1013c is configured to wirelessly connect to, or be paged by, the corresponding base station 1012c. A second UE 1092 in coverage area 1013a is wirelessly connectable to the corresponding base station 1012a. While a plurality of UEs 1091, 1092 are illustrated in this example, the disclosed embodiments are equally applicable to a situation where a sole UE is in the coverage area or where a sole UE is connecting to the corresponding base station 1012.

Telecommunication network 1010 is itself connected to host computer 1030, which may be embodied in the hardware and/or software of a standalone server, a cloud-implemented server, a distributed server or as processing resources in a server farm. Host computer 1030 may be under the ownership or control of a service provider, or may be operated by the service provider or on behalf of the service provider. Connections 1021 and 1022 between telecommunication network 1010 and host computer 1030 may extend directly from core network 1014 to host computer 1030 or may go via an optional intermediate network 1020. Intermediate network 1020 may be one of, or a combination of more than one of, a public, private or hosted network; intermediate network 1020, if any, may be a backbone network or the Internet; in particular, intermediate network 1020 may comprise two or more sub-networks (not shown).

The communication system of **Figure** 10 as a whole enables connectivity between the connected UEs 1091, 1092 and host computer 1030. The connectivity may be described as an over-the-top (OTT) connection 1050. Host computer 1030 and the connected UEs 1091, 1092 are configured to communicate data and/or signaling via OTT connection 1050, using access network 1011, core network 1014, any intermediate network 1020 and possible further infrastructure (not shown) as intermediaries. OTT connection 1050 may be transparent in the sense that the participating communication devices through which OTT connection 1050 passes are unaware of routing of uplink and downlink communications. For example, base station 1012 may not or need not be informed about the past routing of an incoming downlink communication with data originating from host computer 1030 to be forwarded (e.g., handed over) to a connected UE 1091. Similarly, base station 1012 need not be aware of the future routing of an outgoing uplink communication originating from the UE 1091 towards the host computer 1030.

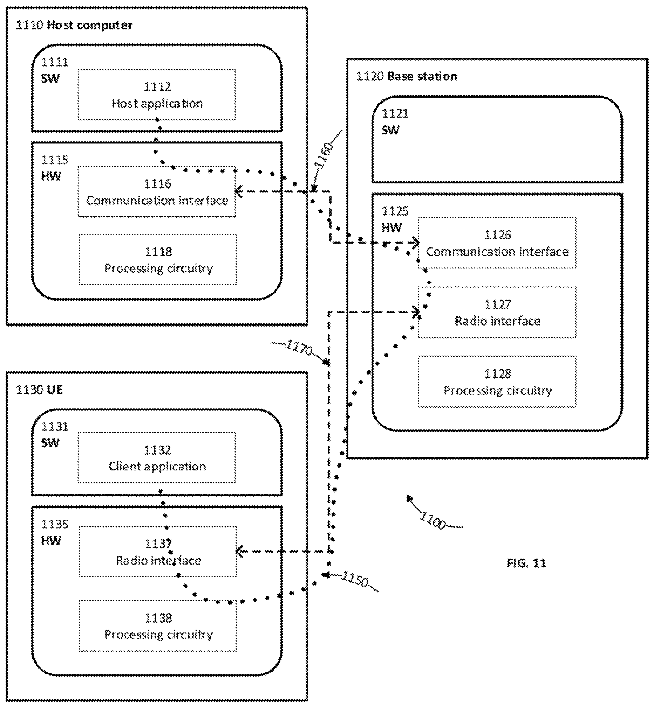

Example implementations, in accordance with an embodiment, of the UE, base station and host computer discussed in the preceding paragraphs will now be described with reference to **Figure 11**. In communication system 1100, host computer 1110 comprises hardware 1115 including communication interface 1116 configured to set up and maintain a wired or wireless connection with an interface of a different communication device of communication system 1100. Host computer 1110 further comprises processing circuitry 1118, which may have storage and/or processing capabilities. In particular, processing circuitry 1118 may comprise one or more programmable processors, application-specific integrated circuits, field programmable gate arrays or combinations of these (not shown) adapted to execute instructions. Host computer 1110 further comprises software 1111, which is stored in or accessible by host computer 1110 and executable by processing circuitry 1118. Software 1111 includes host application 1112. Host application 1112 may be operable to provide a service to a remote user, such as UE 1130 connecting via OTT connection 1150 terminating at UE 1130 and host computer 1110. In providing the service to the remote user, host application 1112 may provide user data which is transmitted using OTT connection 1150.

Communication system 1100 further includes base station 1120 provided in a telecommunication system and comprising hardware 1125 enabling it to communicate with host computer 1110 and with UE 1130. Hardware 1125 may include communication interface 1126 for setting up and maintaining a wired or wireless connection with an interface of a different communication device of communication system 1100, as well as radio interface 1127 for setting up and maintaining at least wireless connection 1170 with UE 1130 located in a coverage area (not shown in **Figure 11**) served by base station 1120. Communication interface 1126 may be configured to facilitate connection 1160 to host computer 1110. Connection 1160 may be direct or it may pass through a core network (not shown in **Figure 11)** of the telecommunication system and/or through one or more intermediate networks outside the telecommunication system. In the embodiment shown, hardware 1125 of base station 1120 further includes processing circuitry 1128, which may comprise one or more programmable processors, application-specific integrated circuits, field programmable gate arrays or combinations of these (not shown) adapted to execute instructions. Base station 1120 further has software 1121 stored internally or accessible via an external connection.

Communication system 1100 further includes UE 1130 already referred to. Its hardware 1135 may include radio interface 1137 configured to set up and maintain wireless connection 1170 with a base station serving a coverage area in which UE 1130 is currently located. Hardware 1135 of UE 1130 further includes processing circuitry 1138, which may comprise one or more programmable processors, application-specific integrated circuits, field programmable gate arrays or combinations of these (not shown) adapted to execute instructions. UE 1130 further comprises software 1131, which is stored in or accessible by UE 1130 and executable by processing circuitry 1138. Software 1131 includes client application 1132. Client application 1132 may be operable to provide a service to a human or non-human user via UE 1130, with the support of host computer 1110. In host computer 1110, an executing host application 1112 may communicate with the executing client application 1132 via OTT connection 1150 terminating at UE 1130 and host computer 1110. In providing the service to the user, client application 1132 may receive request data from host application 1112 and provide user data in response to the request data. OTT connection 1150 may transfer both the request data and the user data. Client application 1132 may interact with the user to generate the user data that it provides.

It is noted that host computer 1110, base station 1120 and UE 1130 illustrated in **Figure 11** may be similar or identical to host computer 1030, one of base stations 1012a, 1012b, 1012c and one of UEs 1091, 1092 of **Figure 10**, respectively. This is to say, the inner workings of these entities may be as shown in **Figure 11** and independently, the surrounding network topology may be that of **Figure 10.**

In **Figure 11**, OTT connection 1150 has been drawn abstractly to illustrate the communication between host computer 1110 and UE 1130 via base station 1120, without explicit reference to any intermediary devices and the precise routing of messages via these devices. Network infrastructure may determine the routing, which it may be configured to hide from UE 1130 or from the service provider operating host computer 1110, or both. While OTT connection 1150 is active, the network infrastructure may further take decisions by which it dynamically changes the routing (e.g., on the basis of load balancing consideration or reconfiguration of the network).

Wireless connection 1170 between UE 1130 and base station 1120 is in accordance with the teachings of the embodiments described throughout this disclosure. One or more of the various embodiments improve the performance of OTT services provided to UE 1130 using OTT connection 1150, in which wireless connection 1170 forms the last segment. More precisely, the teachings of these embodiments may improve the paging process for UEs connected to an NTN base station and thereby provide benefits such as better performance over NTN.

A measurement procedure may be provided for the purpose of monitoring data rate, latency and other factors on which the one or more embodiments improve. There may further be an optional network functionality for reconfiguring OTT connection 1150 between host computer 1110 and UE 1130, in response to variations in the measurement results. The measurement procedure and/or the network functionality for reconfiguring OTT connection 1150 may be implemented in software 1111 and hardware 1115 of host computer 1110 or in software 1131 and hardware 1135 of UE 1130, or both. In embodiments, sensors (not shown) may be deployed in or in association with communication devices through which OTT connection 1150 passes; the sensors may participate in the measurement procedure by supplying values of the monitored quantities exemplified above, or supplying values of other physical quantities from which software 1111, 1131 may compute or estimate the monitored quantities. The reconfiguring of OTT connection 1150 may include message format, retransmission settings, preferred routing etc.; the reconfiguring need not affect base station 1120, and it may be unknown or imperceptible to base station 1120. Such procedures and functionalities may be known and practiced in the art. In certain embodiments, measurements may involve proprietary UE signaling facilitating host computer 1110's measurements of throughput, propagation times, latency and the like. The measurements may be implemented in that software 1111 and 1131 causes messages to be transmitted, in particular empty or 'dummy' messages, using OTT connection 1150 while it monitors propagation times, errors etc.

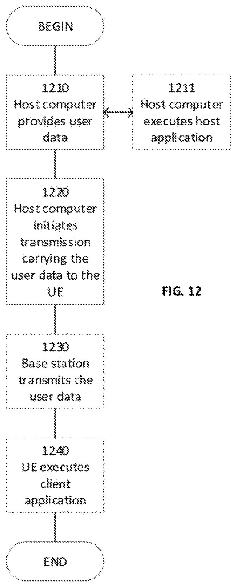

**Figure 12** is a flowchart illustrating a method implemented in a communication system, in accordance with one embodiment. The communication system includes a host computer, a base station and a UE which may be those described with reference to **Figures 10 and 11**. For simplicity of the present disclosure, only drawing references to **Figure 12** will be included in this section. In step 1210, the host computer provides user data. In substep 1211 (which may be optional) of step 1210, the host computer provides the user data by executing a host application. In step 1220, the host computer initiates a transmission carrying the user data to the UE. In step 1230 (which may be optional), the base station transmits to the UE the user data which was carried in the transmission that the host computer initiated, in accordance with the teachings of the embodiments described throughout this disclosure. In step 1240 (which may also be optional), the UE executes a client application associated with the host application executed by the host computer.

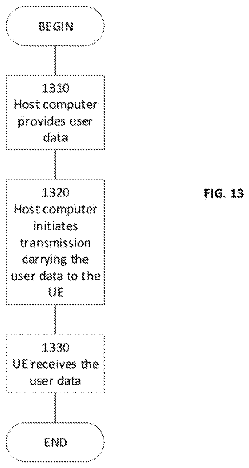

**Figure 13** is a flowchart illustrating a method implemented in a communication system, in accordance with one embodiment. The communication system includes a host computer, a base station and a UE which may be those described with reference to **Figures 10 and 11**. For simplicity of the present disclosure, only drawing references to **Figure 13** will be included in this section. In step 1310 of the method, the host computer provides user data. In an optional substep (not shown) the host computer provides the user data by executing a host application. In step 1320, the host computer initiates a transmission carrying the user data to the UE. The transmission may pass via the base station, in accordance with the teachings of the embodiments described throughout this disclosure. In step 1330 (which may be optional), the UE receives the user data carried in the transmission.

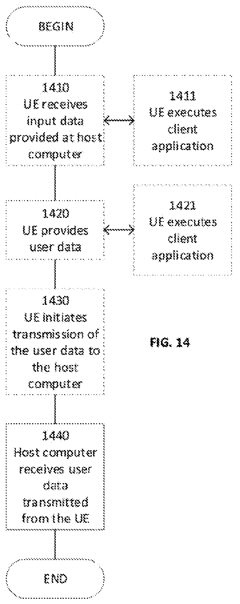

**Figure 14** is a flowchart illustrating a method implemented in a communication system, in accordance with one embodiment. The communication system includes a host computer, a base station and a UE which may be those described with reference to **Figures 10 and 11**. For simplicity of the present disclosure, only drawing references to **Figure 14** will be included in this section. In step 1410 (which may be optional), the UE receives input data provided by the host computer. Additionally or alternatively, in step 1420, the UE provides user data. In substep 1421 (which may be optional) of step 1420, the UE provides the user data by executing a client application. In substep 1411 (which may be optional) of step 1410, the UE executes a client application which provides the user data in reaction to the received input data provided by the host computer. In providing the user data, the executed client application may further consider user input received from the user. Regardless of the specific manner in which the user data was provided, the UE initiates, in substep 1430 (which may be optional), transmission of the user data to the host computer. In step 1440 of the method, the host computer receives the user data transmitted from the UE, in accordance with the teachings of the embodiments described throughout this disclosure.

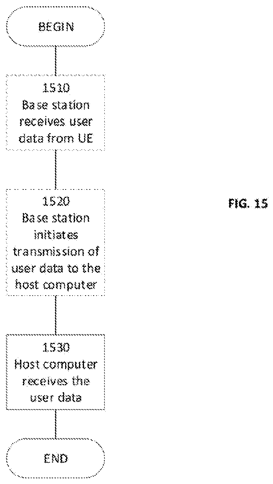

**Figure 15** is a flowchart illustrating a method implemented in a communication system, in accordance with one embodiment. The communication system includes a host computer, a base station and a UE which may be those described with reference to **Figures 10 and 11**. For simplicity of the present disclosure, only drawing references to **Figure 15** will be included in this section. In step 1510 (which may be optional), in accordance with the teachings of the embodiments described throughout this disclosure, the base station receives user data from the UE. In step 1520 (which may be optional), the base station initiates transmission of the received user data to the host computer. In step 1530 (which may be optional), the host computer receives the user data carried in the transmission initiated by the base station.

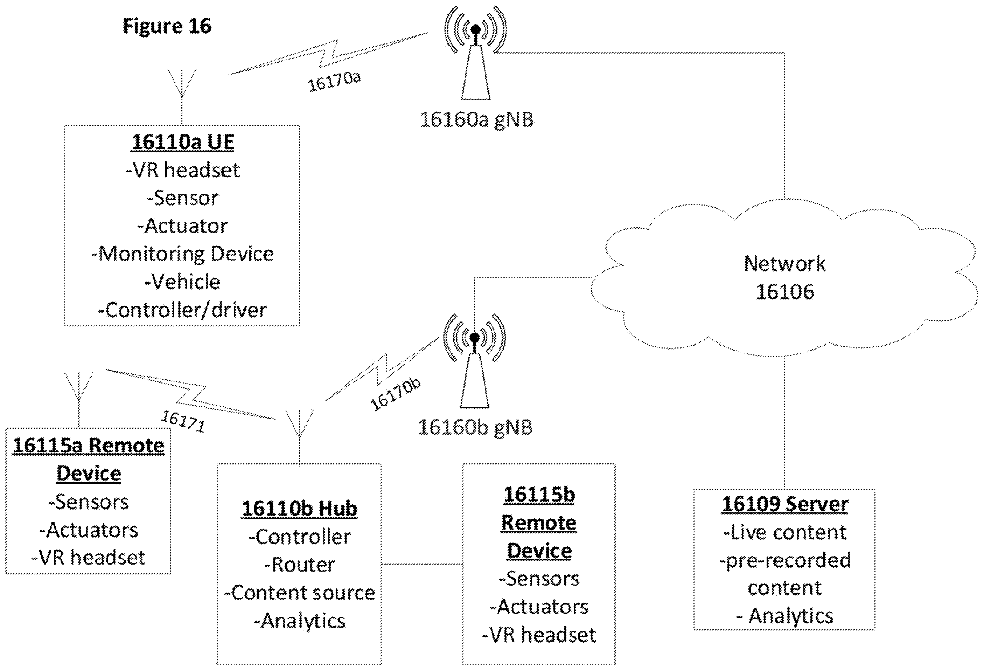

**Figure 16** depicts a wireless network comprising different devices connected, either directly or indirectly, to the wireless network through one or more access network nodes, such as gNBs 16160a and 16160b. In particular, the wireless network includes access network nodes such as gNBs 16160a and 16160b, UE 16110a, hub 16110b, remote devices 16115a and 16115b and server 16109. UE 16110a and hub 16110b may be any of a wide variety of devices capable of communicating wirelessly with gNBs 16160's. Although hub 16110b is referred to as a hub, it may also be considered a UE (with hub functionality) because it is able to communicate wirelessly with gNB 16160b using a standard protocol, for example a wireless standard such as one provided by 3GPP. In fact, each of the devices illustrated in **Figure 16** represent a wide variety of different devices that can be used in different scenarios as discussed in more detail below. Any of these devices which are able to communicate wirelessly with a gNB, eNB or any other similar 3GPP access node may be considered a wireless device or UE.

Looking now at some of the possibilities, UE 16110a may be any of a variety of different devices that are able to wirelessly communicate with gNB 16160a. Some examples, which are listed in **Figure 16,** include a virtual reality (VR) headset, a sensor, an actuator, a monitoring device, a vehicle, or a remote controller. These examples are not exhaustive and include therein a wide variety of more specific devices, including a wide range of Internet of Things (IoT) devices. For example, in embodiments where UE 16110a is a VR headset, UE 16110a may be a cell phone that is used with a head mount or it may be a standalone or dedicated VR headset. In some embodiments UE 16110a may be an augmented reality (AR) headset. As an AR or VR headset UE 16110a may be used for entertainment (e.g., gaming, videos, etc.), education/business (e.g., remote conferences, virtual lectures, etc.), medical (e.g., remote diagnostic, patient consultation, etc.), or any other use in which virtual or augmented content may be provided to a remote user. In any of these cases UE 16110a may be receiving content via wireless connection 16170a with gNB 16160a.

As another example, in embodiments where UE 16110a is a sensor or monitoring device, UE 16110a may be a motion, gravitational, moisture, temperature, biometric, speed, door/window open, smoke, fire, volume, flow, or any other type of device that is able to detect or measure one or more conditions. As a sensor UE 16110a may also be able to capture conditions. For example, UE 16110a may capture images if it comprises a camera or sound if it comprises a microphone. Regardless of the type of sensor, UE 16110a may provide an output via wireless connection 16170a to gNB 16160a. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, in embodiments where UE 16110a is an actuator, UE 16110a may be a motor, switch, or any other device that may change states in response to receiving an input via wireless connection 16170a. For example, UE 16100a may be a vibrator that creates vibration to provide a user with haptic feedback. As another example UE 16100a may be a small motor that adjusts the control surfaces of a drone in flight or to a robotic arm performing a medical procedure. As another example, UE 16100a may be a switch that remotely turns on another device, such as a light.

As another example, in embodiments where UE 16110a is a vehicle, UE 16110a may be a drone, car, plane, ship, train, tractor, robot, or any other type of device comprising one or more sensors and/or actuators that may change its locations whether autonomously or at the direction of a user. In such embodiments where UE 16110a is a remotely controlled vehicle, such as a drone, it may receive instructions on movement, actuating, or sensing from a user via wireless connection 16170a and provide location, sensor or video information back to the user via wireless connection 16170a. In such embodiments where UE 16110a is an autonomous vehicle it may receive alerts and other messages from other vehicles and/or infrastructure sensors via wireless connection 16170a as well provide its own telemetry data to others via wireless connection 16170a.

As another example, in embodiments where UE 16110a is a remote control, UE 16110a may be a device dedicated to controlling other devices or a general purpose computer with a program or application that provides control of other devices. UE 16110a may send commands to a remote device via wireless connection 16170a. UE 16110a may also receive feedback, telemetry, or other information from the remote device via wireless connection 16170a. UE 16110a may present this received information to a user who may then issue commands for the remote device. For example, UE 16110a may receive via wireless connection 16170a a video signal from a remote surgical room and then issue commands via wireless connection 16170a to a remote surgical machine that can execute the commands.

While only a single UE 16110a is illustrated in **Figure 16**, in practice any number of UEs may be used together with respect to a single use case. For example, a first UE 16110a may be a speed sensor used in a drone which provides the drone's speed information to a second UE 16110a that is a remote control operating the drone. When the user makes changes from the remote control, a third UE 16110a that is an actuator may adjust a throttle on the drone to increase or decrease the speed. Similarly, in the example above, the first (sensor) and third (actuator) UE 16110a's may be a single UE that handles communication for both the speed sensor and the actuators or UE 16 110a may comprise one or more of the above. Similarly, in the example above, a hub, such as hub 16110b, may be used to handle communication between the sensors and actuators and the controller.

Hub 16110b may be any of a variety of different devices that provides wireless access to gNB 16160b for one or more remote devices 16115a. Some examples of different types of hubs are listed in **Figure 16** and include a controller, router, content source and analytics. Hub 16110b may include memory to store data (e.g., video, audio, images, buffer, sensor data, file share) that is collected from, or is to be provided to, remote device 16115a. Hub 16110b hub may include a processor, operating system, and server functionality. Hub 16110b may include components for wireless communication to enable wireless connection 16171 to remote device 16115a and/or components for a fixed connection to remote device 16115b. Hub 16110b may also include routing capabilities, firewall capabilities, a VPN-server or VPN-client. Hub 16110b may also allow for a different communication scheme and/or schedule between hub 16110b and remote devices 16115 and between hub 16110b and network 16106.

As one example, hub 16110b may be a broadband router enabling direct or indirect access to network 16106 for remote device 16115a. In certain embodiments, hub 16110b may facilitate communication between remote devices 16115a and 16115b. This may be done with, or without, the communications passing through network 16106. In some embodiments, hub 16110b may simply forward the data from remote device 16115a or 16115b to network 16106. In some embodiments, hub 16110b may first filter, buffer, store, analyze or collate the data from remote device 16115a or 16115b before sending on the data to network 16106 or another remote device. Similarly, the data from network 16106 may pass directly through hub 16110b or it may first be processed by hub 16110b on the way to remote device 16115a or 16115b.

As another example, hub 16110b may be a controller that sends commands or instructions to one or more actuators in remote device 16115a. The commands or instructions may be received from a second remote device 16115b, from gNB 16160b or by executable code, script or process instructions in hub 16110b.

As another example, hub 16110b may be a collection place for data from one or more remote devices 16115a and/or 16115b. For example, remote devices 16115a and/or 16115b may be a sensor, a camera, measurement equipment, or any other type of device discussed herein that may provide output or receive input. Hub 16110b may act as a temporary storage for data from, for example remote device 16115b and, in some embodiments, may perform analysis, or other processing on the data. Hub 16110b may have a constant/persistent or intermittent connection to gNB 16160b.

As another example, hub 16110b may be a content source. For example, when remote device 16115a is a VR headset, display, loudspeaker or other media delivery device, hub 16110b may retrieve VR assets, video, audio, or other media via gNB 16160b which it then provides to remote device 16115a either directly, after some local processing, and/or after adding additional local content.

Remote device 16115a may be any of a variety of different devices, for example, remote device 16115a may be a device comprising one or more of sensors, actuators, and/or a screen. Remote device 16115a may alternatively be a VR (or AR) headset, a Machine-2-Machine (M2M) device, an IoT device, an internet of Everything (IoE) device, or any other type of device which is capable of accessing a communication network wirelessly via a hub or a device capable of acting as a hub, which in the present context comprise providing network access to a device which is not able to communicate directly with communication network 16106 via gNB 16160a or 16160b. In some scenarios, remote device 16115a may be able to establish a wireless connection with gNB 16160a or 16160b yet nonetheless still connects via hub 16 110b. Remote device 16115b may be similar to remote device 16115a in most respects except that it has a wired connection to hub 16110b rather than a wireless connection, such as wireless connection 16171.

gNBs 16160a and 16160b may provide various wireless devices such as UE 16110a and hub 16110b with wireless access to network 16106. Network 16106 may connect the various devices illustrated in **Figure 16** including server 16109 which may host a variety of applications such as live and pre-recorded content, data collection services such as retrieving and compiling data on various ambient conditions detected by a plurality of remote devices 16115a, 16115b or UE 16110a, analytics functionality, social media, functions for controlling or otherwise interacting with remote devices, functions for an alarm and surveillance center, or any other such function done by a server. For example, factory status information may be collected and analyzed by server 16109. As another example, server 16109 may process audio and video data which may have been retrieved from UE 16110a for use in creating maps. As another example, server 16109 may collect and analyze real-time data to assist in controlling vehicle congestion (e.g., controlling traffic lights). As another example, server 16109 may store surveillance video uploaded by remote device 16115b via hub 16110b. As another example, server 16109 may store media content such as video, audio, VR, or AR which it can broadcast, multicast or unicast to remote devices such as UE 16110a or remote device 16115a. As other examples, server 16109 may be used for energy pricing, for remote control of non-time critical electrical load to balance power generation needs, location services, presentation services (such as compiling diagrams etc. from data collected from remote devices), or any other function of collecting, retrieving, storing, analyzing and/or transmitting data.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

## REFERENCES

[1] TR 38.811, Study on New Radio (NR) to support non-terrestrial networks

[2] TR 38.821, Solutions for NR to support non-terrestrial networks

[3] RP-193234, Solutions for NR to support non-terrestrial networks (NTN) , 3GPP RAN#86

[4] RP-193235, Study on NB-lo/eMTC support for Non-Terrestrial Network, 3GPP RAN#86

[5] 3GPP TS 23.032, Universal Geographical Area Description (GAD)

## ABBREVIATIONS

At least some of the following abbreviations may be used in this disclosure. If there is an inconsistency between abbreviations, preference should be given to how it is used above. If listed multiple times below, the first listing should be preferred over any subsequent listing(s).

1x RTT                    CDMA2000 1x Radio Transmission Technology

3GPP                     3rd Generation Partnership Project

5G                        5th Generation

| 5GC | 5G Core |
|---|---|
| 5GS | 5G System |
| ABS | Almost Blank Subframe |
| AMF | Access and Mobility management Function |
| bps | Bits per second |
| ARQ | Automatic Repeat Request |
| AWGN | Additive White Gaussian Noise |
| BCCH | Broadcast Control Channel |
| BCH | Broadcast Channel |
| BS | Base Station |
| CA | Carrier Aggregation |
| CC | Carrier Component |
| CCCH SDU | Common Control Channel SDU |
| CDMA | Code Division Multiplexing Access |
| CE | Control Element |
| CGI | Cell Global Identifier |
| CIR | Channel Impulse Response |
| CN | Core Network |
| CP | Cyclic Prefix |
| CPICH | Common Pilot Channel |
| CPICH Ec/No | CPICH Received energy per chip divided by the power density in the band |
| CQI | Channel Quality information |
| C-RNTI | Cell RNTI |
| CRS | Cell Reference Signal |
| CSI | Channel State Information |
| CSI-RS | Channel Status Information Reference Signal |
| DCCH | Dedicated Control Channel |
| DCI | Downlink Control Information |
| DL | Downlink |

| | |
|---|---|
| DM | Demodulation |
| DMRS | Demodulation Reference Signal |
| DRX | Discontinuous Reception |
| eDRX | Extended DRX |
| DTX | Discontinuous Transmission |
| DTCH | Dedicated Traffic Channel |
| DUT | Device Under Test |
| E-CID | Enhanced Cell-ID (positioning method) |
| E-SMLC | Evolved-Serving Mobile Location Centre |
| ECGI | Evolved CGI |
| eMBB | Evolved Mobile Broadband |
| eMTC | Enhanced Machine Type Communication |
| eNB | Evolved NodeB (A radio base station in LTE.) |
| EPC | Evolved Packet Core |
| ePDCCH | enhanced Physical Downlink Control Channel |
| EPS | Evolved Packet System |
| E-SMLC | evolved Serving Mobile Location Center |
| E-UTRA | Evolved UTRA |
| E-UTRAN | Evolved UTRAN |
| FA | Frequency Adjustment |
| FDD | Frequency Division Duplex |
| FFS | For Further Study |
| GAD | Geographical Area Description |
| GEO | Geostationary Earth Orbit |
| GERAN | GSM EDGE Radio Access Network |
| GHz | Gigahertz |
| gNB | Base station in NR |
| GLONASS | Global Navigation Satellite System |
| GNSS | Global Navigation Satellite System |

| | |
|---|---|
| GPS | Global Positioning System |
| GSM | Global System for Mobile communication |
| GW | Gateway |
| HARQ | Hybrid Automatic Repeat Request |
| HO | Handover |
| H-SFN | Hyper System Frame Number |
| HSPA | High Speed Packet Access |
| HRPD | High Rate Packet Data |
| Hz | Hertz |
| ID | Identity/Identifier |
| kHz | Kilohertz |
| LEO | Low Earth Orbit |
| LOS | Line of Sight |
| LPP | LTE Positioning Protocol |
| LTE | Long-Term Evolution |
| LTE-M | LTE-Machine Type Communication |
| MAC | Medium Access Control |
| MAC CE | MAC Control Element |
| MBB | Mobile Broadband |
| MBMS | Multimedia Broadcast Multicast Services |
| MBSFN | Multimedia Broadcast multicast service Single Frequency Network |
| MBSFN ABS MBSFN | Almost Blank Subframe |
| MDT | Minimization of Drive Tests |
| MEO | Medium Earth Orbit |
| MIB | Master Information Block |
| μs | Microsecond |
| MME | Mobility Management Entity |
| mMTC | Massive Machine Type Communication |
| ms | Millisecond |

| | |
|---|---|
| MSC | Mobile Switching Center |
| NB-loT | Narrowband Internet of Things |
| NGAP | NG Application Protocol |
| NPDCCH | Narrowband Physical Downlink Control Channel |
| NR | New Radio |
| NTN | Non-terrestrial Network |
| OCNG | OFDMA Channel Noise Generator |
| OFDM | Orthogonal Frequency Division Multiplexing |
| OFDMA | Orthogonal Frequency Division Multiple Access |
| OSS | Operations Support System |
| OTDOA | Observed Time Difference of Arrival |
| O&M | Operation and Maintenance |
| PBCH | Physical Broadcast Channel |
| P-CCPCH | Primary Common Control Physical Channel |
| PCell | Primary Cell |
| PCFICH | Physical Control Format Indicator Channel |
| PDCCH | Physical Downlink Control Channel |
| PDCP | Packet Data Convergence Protocol |
| PDP | Profile Delay Profile |
| PDSCH | Physical Downlink Shared Channel |
| PDU | Packet Data Unit |
| PGW | Packet Gateway |
| PHICH | Physical Hybrid-ARQ Indicator Channel |
| PLMN | Public Land Mobile Network |
| PMI | Precoder Matrix Indicator |
| ppm | Parts per million |
| PRACH | Physical Random Access Channel |
| PRB | Physical Resource Block |
| PRS | Positioning Reference Signal |

| | |
|---|---|
| PSS | Primary Synchronization Signal |
| PUCCH | Physical Uplink Control Channel |
| PUSCH | Physical Uplink Shared Channel |
| RA | Random Access |
| RACH | Random Access Channel |
| QAM | Quadrature Amplitude Modulation |
| RAN | Radio Access Network |
| RANAC | RAN Area Code |
| RAR | Random Access Response |
| RAT | Radio Access Technology |
| RF | Radio Frequency |
| RLC | Radio Link Control |
| RLM | Radio Link Management |
| RNA | RAN-based Notification Area |
| RNC | Radio Network Controller |
| RNTI | Radio Network Temporary Identifier |
| RRC | Radio Resource Control |
| RRM | Radio Resource Management |
| RS | Reference Signal |
| RSCP | Received Signal Code Power |
| RSRP | Reference Symbol Received Power OR Reference Signal Received Power |
| RSRQ | Reference Signal Received Quality OR Reference Symbol Received Quality |
| RSSI | Received Signal Strength Indicator |
| RSTD | Reference Signal Time Difference |
| SCH | Synchronization Channel |
| SCell | Secondary Cell |
| SDAP | Service Data Adaptation Protocol |
| SDU | Service Data Unit |

| SFN | System Frame Number |
|---|---|
| SGW | Serving Gateway |
| SI | System Information |
| SID | Study Item Description |
| SIB | System Information Block |
| SNR | Signal to Noise Ratio |
| SON | Self Optimized Network |
| SRS | Sounding Reference Signal |
| SS | Synchronization Signal |
| SSS | Secondary Synchronization Signal |
| SSID | Service Set Identifier |
| TA | Timing Advance |
| TA | Tracking Area |
| TAC | Tracking Area Code |
| TAI | Tracking Area Identifier |
| TDD | Time Division Duplex |
| TDOA | Time Difference of Arrival |
| TOA | Time of Arrival |
| TSS | Tertiary Synchronization Signal |
| TTI | Transmission Time Interval |
| TR | Technical Report |
| UCI | Uplink Control Information |
| UE | User Equipment |
| UL | Uplink |
| ULI | User Location Information |
| UMTS | Universal Mobile Telecommunication System |
| URLLC | Ultra-Reliable Low-Latency Communication |
| USIM | Universal Subscriber Identity Module |
| UTC | Coordinated Universal Time |

| UTDOA | Uplink Time Difference of Arrival |
| UTRA | Universal Terrestrial Radio Access |
| UTRAN | Universal Terrestrial Radio Access Network |
| WCDMA | Wide CDMA |
| WI | Work Item |
| WLAN | Wireless Local Area Network |
| Xn | The interface between two gNBs. |
| XnAP | Xn Application Protocol |

**Claims**

1. A method performed by a wireless device for improved reachability for paging in a wireless communication network based Non-Terrestrial Network, the method comprising:

   obtaining (502) geographic location information indicating a geographic location or zone in which the wireless device is located;
   providing (504) the geographic location information describing the location of the wireless device to a network node;
   providing (506) the network node with additional information regarding a status of the wireless device, the additional information comprising one or more of the following: battery status of the wireless device; velocity of the wireless device; and/or direction of travel of the wireless device,
   receiving (514), from the wireless communication network, information associated with a geographic area within which the wireless device can move without informing the wireless communication network of its location, wherein the geographic area includes the location or zone in which the wireless device is located; and
   receiving (518) a paging message from the wireless communication network based at least in part on the geographic location information and the additional information, and wherein the paging message from the wireless communication network is based at least in part on the geographic area within which the wireless device can move without informing the wireless communication network.

2. The method of Claim 1, wherein the wireless device obtains the geographic location information from a source other than the wireless communication network,, and wherein the wireless device obtains the geographic location information from a global navigation satellite system.

3. The method of any of Claims 1 to 2, wherein the wireless device keeps track of its location after providing the geographic location information to the network node.

4. The method of Claim 3, further comprising: providing (614) the network node with updated location information upon any of the following events: the wireless device leaves the geographic area; at a specific time; the occurrence of a triggering event; on a periodic basis; and/or the wireless device has moved a threshold distance from a previous location of the wireless device.

5. The method of any of Claims 1 to 4, further comprising receiving, from the wireless communication system, updated information associated with an updated area within which the wireless device can move without informing the wireless communication network of its location.

6. The method of any of Claims 1 to 5, wherein the geographic area within which the wireless device can move without informing the network of its location has a shape of: a circle; an ellipse; a polygon; and/or a shape based at least in part on a country's border.

7. The method of any of Claims 1 to 6, wherein the information associated with the geographic area within which the wireless device can move without informing the wireless communication network of its location further includes information associated with changes in shape of the area over time.

8. A wireless device configured to perform operations according to any of Claims 1 to 7.

9. A method performed by a network node in a wireless communication network based Non-Terrestrial Network, comprising:

obtaining (504), from a wireless device, geographic location information associated with the wireless device, wherein the geographic location information indicates a geographic location or zone in which the wireless device is located;

obtaining (506) from the wireless device additional information regarding a status of the wireless device, the additional information comprising one or more of the following: battery status of the wireless device; velocity of the wireless device; and/or direction of travel of the wireless device,

determining (508), in response to obtaining the geographic location information of the wireless device, at least one cell of the wireless communication network that covers the geographic location associated with the wireless device or fully or partially overlaps with the zone associated with the wireless device;

identifying (510) additional cells neighbouring the determined cell covering the geographic location associated with the wireless device,

determining (512), taking the additional information into account, a geographic area, in which the geographic location or the zone associated with the wireless device is included, within which the wireless device can move without informing the wireless communication network;

transmitting (514), to the wireless device, information associated with the geographic area within which the wireless device can move without informing the wireless communication network; and

transmitting (518) a paging message to the wireless device in the at least one cell.

10. The method of Claim 9, wherein obtaining the geographic location associated with the wireless device comprises receiving a location report from the wireless device, and wherein the location report provides the geographic location associated with the wireless device with less accuracy than the wireless device is capable of providing.

11. The method of any of Claims 9 to 10, further comprising receiving an updated location or an updated zone associated with the wireless device and determining an updated cell covering the updated location.

12. The method of Claim 11 wherein the updated location or updated zone is received upon occurrence of any of the following: the wireless device leaves the geographic area within which the wireless device can move without informing the wireless communication network; at a specific time; upon a triggering event; on a periodic basis; when the wireless device has moved a threshold distance from the geographic location; and/or when the wireless device has moved a threshold distance from the location the wireless device was located at when reporting the zone as the location information.

13. The method of any of Claims 9 to 12, wherein determining the cell covering the geographic location comprises mapping the geographic area within which the wireless device can move without informing the wireless communication network to a set of cells or virtual cells that currently overlap with the geographic area.

14. The method of any of Claims 9 to 13, wherein transmitting the paging message to the wireless device comprises transmitting paging messages within an increasingly large geographic paging area with successive paging attempts, and wherein an initial paging area is smaller than the geographic area within which the wireless device can move without informing the wireless communication network.

15. A network node configured to perform operations according to any of Claims 9 to 14.

## Patentansprüche

1. Verfahren, das durch eine drahtlose Vorrichtung für eine verbesserte Erreichbarkeit zum Paging in einem drahtlosen Kommunikationsnetzwerk basierend auf einem nicht terrestrischen Netzwerk durchgeführt wird, das Verfahren umfassend:

Erhalten (502) von geografischen Standortinformationen, die einen geografischen Standort oder eine Zone angeben, in der sich die drahtlose Vorrichtung befindet;

Bereitstellen (504) der geografischen Standortinformationen, die den Standort der drahtlosen Vorrichtung beschreiben, an einen Netzwerkknoten;

Versehen (506) des Netzwerkknotens mit zusätzlichen Informationen bezüglich eines Status der drahtlosen Vorrichtung, die zusätzlichen Informationen umfassend eines oder mehrere der folgenden: Batteriestatus der drahtlosen Vorrichtung; Geschwindigkeit der drahtlosen Vorrichtung; und/oder Fahrtrichtung der drahtlosen Vorrichtung,

Empfangen (514), von dem drahtlosen Kommunikationsnetzwerk, von Informationen, die einem geografischen Bereich zugeordnet sind, innerhalb dessen sich die drahtlose Vorrichtung bewegen kann, ohne das drahtlose Kommunikationsnetzwerk über ihren Standort zu informieren, wobei der geografische Bereich den Standort oder die Zone umfasst, in der sich die drahtlose Vorrichtung befindet; und

Empfangen (518) einer Paging-Nachricht von dem drahtlosen Kommunikationsnetzwerk basierend mindestens teilweise auf den geografischen Standortinformationen und den zusätzlichen Informationen, und wobei die Paging-Nachricht von dem drahtlosen Kommunikationsnetzwerk mindestens teilweise auf dem geografischen Bereich basiert, innerhalb dessen sich die drahtlose Vorrichtung bewegen kann, ohne das drahtlose Kommunikationsnetzwerk zu informieren.

2. Verfahren nach Anspruch 1, wobei die drahtlose Vorrichtung die geografischen Standortinformationen von einer anderen Quelle als dem drahtlosen Kommunikationsnetzwerk erhält, und wobei die drahtlose Vorrichtung die geografischen Standortinformationen von einem globalen Navigationssatellitensystem erhält.

3. Verfahren nach einem der Ansprüche 1 bis 2, wobei die drahtlose Vorrichtung ihren Standort verfolgt, nachdem die geografischen Standortinformationen an den Netzwerkknoten bereitgestellt wurden.

4. Verfahren nach Anspruch 3, ferner umfassend: Versehen (614) des Netzwerkknotens mit aktualisierten Standortinformationen bei einem der folgenden Ereignisse: die drahtlose Vorrichtung verlässt den geografischen Bereich; zu einem spezifischen Zeitpunkt; das Auftreten eines auslösenden Ereignisses; auf einer periodischen Basis; und/oder die drahtlose Vorrichtung hat sich um eine Schwellenentfernung von einem vorherigen Standort der drahtlosen Vorrichtung bewegt.

5. Verfahren nach einem der Ansprüche 1 bis 4, ferner umfassend das Empfangen, von dem drahtlosen Kommunikationssystem, von aktualisierten Informationen, die einem aktualisierten Bereich zugeordnet sind, innerhalb dessen sich die drahtlose Vorrichtung bewegen kann, ohne das drahtlose Kommunikationsnetzwerk über ihren Standort zu informieren.

6. Verfahren nach einem der Ansprüche 1 bis 5, wobei der geografische Bereich, innerhalb dessen sich die drahtlose Vorrichtung bewegen kann, ohne das Netzwerk über ihren Standort zu informieren, eine Form aufweist von: einem Kreis; einer Ellipse; einem Polygon; und/oder eine Form, die mindestens teilweise auf der Grenze eines Landes basiert.

7. Verfahren nach einem der Ansprüche 1 bis 6, wobei die Informationen, die dem geografischen Bereich zugeordnet sind, innerhalb dessen sich die drahtlose Vorrichtung bewegen kann, ohne das drahtlose Kommunikationsnetzwerk über ihren Standort zu informieren, ferner Informationen einschließen, die Änderungen der Form des Bereichs im Laufe der Zeit zugeordnet sind.

8. Drahtlose Vorrichtung, die konfiguriert ist, um Vorgänge nach einem der Ansprüche 1 bis 7 durchzuführen.

9. Verfahren, das durch einen Netzwerkknoten in einem drahtlosen Kommunikationsnetzwerk basierend auf einem nicht terrestrischen Netzwerk durchgeführt wird, umfassend:

Erhalten (504), von einer drahtlosen Vorrichtung, von geografischen Standortinformationen, die der drahtlosen Vorrichtung zugeordnet sind, wobei die geografischen Standortinformationen einen geografischen Standort oder eine Zone angeben, in der sich die drahtlose Vorrichtung befindet;

Erhalten (506), von der drahtlosen Vorrichtung, von zusätzlichen Informationen bezüglich eines Status der drahtlosen Vorrichtung, die zusätzlichen Informationen umfassend eines oder mehrere der folgenden: Batteriestatus der drahtlosen Vorrichtung; Geschwindigkeit der drahtlosen Vorrichtung; und/oder Fahrtrichtung der drahtlosen Vorrichtung,

Bestimmen (508), als Reaktion auf das Erhalten der geografischen Standortinformationen der drahtlosen Vorrichtung, mindestens einer Zelle des drahtlosen Kommunikationsnetzwerks, die den geografischen Standort, der der drahtlosen Vorrichtung zugeordnet ist, abdeckt oder vollständig oder teilweise mit der Zone überlappt, die der drahtlosen Vorrichtung zugeordnet ist;

Identifizieren (510) zusätzlicher Zellen, die an die bestimmte Zelle angrenzen, die den geografischen Standort abdeckt, der der drahtlosen Vorrichtung zugeordnet ist,

Bestimmen (512), unter Berücksichtigung der zusätzlichen Informationen, eines geografischen Bereichs, in dem der geografische Standort oder die Zone, die der drahtlosen Vorrichtung zugeordnet sind, eingeschlossen ist, innerhalb dessen sich die drahtlose Vorrichtung bewegen kann, ohne das drahtlose Kommunikationsnetzwerk zu informieren;

Übertragen (514), an die drahtlose Vorrichtung, von Informationen, die dem geografischen Bereich zugeordnet sind, innerhalb dessen sich die drahtlose Vorrichtung bewegen kann, ohne das drahtlose Kommunikationsnetzwerk zu informieren; und

Übertragen (518) einer Paging-Nachricht an die drahtlose Vorrichtung in der mindestens einen Zelle.

10. Verfahren nach Anspruch 9, wobei das Erhalten des geografischen Standorts, der der drahtlosen Vorrichtung zugeordnet ist, das Empfangen eines Standortsberichts von der drahtlosen Vorrichtung umfasst, und wobei der Standortsbericht den geografischen Standort, der der drahtlosen Vorrichtung zugeordnet ist, mit geringerer Genauigkeit bereitstellt, als die drahtlose Vorrichtung bereitzustellen imstande ist.

11. Verfahren nach einem der Ansprüche 9 bis 10, ferner umfassend das Empfangen eines aktualisierten Standorts oder einer aktualisierten Zone, die der drahtlosen Vorrichtung zugeordnet sind, und das Bestimmen einer aktualisierten Zelle, die den aktualisierten Standort abdeckt.

12. Verfahren nach Anspruch 11, wobei der aktualisierte Standort oder die aktualisierte Zone bei dem Auftreten eines beliebigen der folgenden Ereignisse empfangen wird: die drahtlose Vorrichtung verlässt den geografischen Bereich, innerhalb dessen sich das drahtlose Gerät bewegen kann, ohne das drahtlose Kommunikationsnetzwerk zu informieren; zu einem spezifischen Zeitpunkt; bei einem auslösenden Ereignis; auf einer periodischen Basis; wenn sich die drahtlose Vorrichtung um eine Schwellenentfernung von dem geografischen Standort entfernt hat; und/oder wenn sich die drahtlose Vorrichtung um eine Schwellenentfernung von dem Standort entfernt hat, an dem sich die drahtlose Vorrichtung befand, als die Zone als die Standortsinformation berichtet wurden.

13. Verfahren nach einem der Ansprüche 9 bis 12, wobei das Bestimmen der Zelle, die den geografischen Standort abdeckt, ein Abbilden des geografischen Bereichs, innerhalb dessen sich die drahtlose Vorrichtung bewegen kann, ohne das drahtlose Kommunikationsnetzwerk zu informieren, auf einen Satz von Zellen oder virtuellen Zellen umfasst, die derzeit mit dem geografischen Bereich überlappen.

14. Verfahren nach einem der Ansprüche 9 bis 13, wobei das Übertragen der Paging-Nachricht an die drahtlose Vorrichtung das Übertragen von Paging-Nachrichten innerhalb eines zunehmend größeren geografischen Paging-Bereichs mit aufeinanderfolgenden Paging-Versuchen umfasst, und wobei ein anfänglicher Paging-Bereich geringer als der geografische Bereich ist, innerhalb dessen sich die drahtlose Vorrichtung bewegen kann, ohne das drahtlose Kommunikationsnetzwerk zu informieren.

15. Netzwerkknoten, der konfiguriert ist, um Vorgänge nach einem der Ansprüche 9 bis 14 durchzuführen.

## Revendications

1. Procédé mis en œuvre par un dispositif sans fil destiné à une joignabilité améliorée pour une radiomessagerie dans un réseau non terrestre basé sur un réseau de communication sans fil, le procédé comprenant :

l'obtention (502) d'informations de localisation géographique indiquant une localisation ou zone géographique dans laquelle le dispositif sans fil est localisé ;

la fourniture (504) des informations de localisation géographique décrivant la localisation du dispositif sans fil à un nœud de réseau ;

la fourniture (506) au nœud de réseau d'informations supplémentaires concernant un statut du dispositif sans fil, les informations supplémentaires comprenant un ou plusieurs de ce qui suit : statut de batterie du dispositif sans fil ; vitesse du dispositif sans fil ; et/ou direction d'avancement du dispositif sans fil,

la réception (514), en provenance du réseau de communication sans fil, d'informations associées à une région géographique au sein de laquelle le dispositif sans fil peut se déplacer sans informer le réseau de communication sans fil de sa localisation, dans lequel la région géographique comporte la localisation ou zone dans laquelle le dispositif sans fil est localisé ; et

la réception (518) d'un message de radiomessagerie en provenance du réseau de communication sans fil en fonction au moins en partie des informations de localisation géographique et des informations supplémentaires, et dans lequel le message de radiomessagerie provenant du réseau de communication sans fil est en fonction au moins en partie de la région géographique au sein de laquelle le dispositif sans fil peut se déplacer sans informer le réseau de communication sans fil.

2. Procédé selon la revendication 1, dans lequel le dispositif sans fil obtient les informations de localisation géographique auprès d'une source autre que le réseau de communication sans fil, et dans lequel le dispositif sans fil obtient les informations de localisation géographique auprès d'un système mondial de navigation par satellite.

3. Procédé selon l'une quelconque des revendications 1 à 2, dans lequel le dispositif sans fil conserve une trace de sa localisation après avoir fourni les informations de localisation géographique au nœud de réseau.

4. Procédé selon la revendication 3, comprenant en outre : la fourniture (614) au nœud de réseau d'informations de localisation mises à jour lors de l'un quelconque des événements suivants : le dispositif sans fil quitte la région géographique ; à un moment spécifique ; l'occurrence d'un événement déclencheur ; sur une base périodique ; et/ou le dispositif sans fil s'est déplacé d'une distance seuil par rapport à une localisation précédente du dispositif sans fil.

5. Procédé selon l'une quelconque des revendications 1 à 4, comprenant en outre la réception, en provenance du système de communication sans fil, d'informations mises à jour associées à une région mise à jour au sein de laquelle le dispositif sans fil peut se déplacer sans informer le réseau de communication sans fil de sa localisation.

6. Procédé selon l'une quelconque des revendications 1 à 5, dans lequel la région géographique au sein de laquelle le dispositif sans fil peut se déplacer sans informer le réseau de sa localisation a une forme : d'un cercle ; d'une ellipse ; d'un polygone ; et/ou une forme en fonction au moins en partie d'une frontière du pays.

7. Procédé selon l'une quelconque des revendications 1 à 6, dans lequel les informations associées à la région géographique au sein de laquelle le dispositif sans fil peut se déplacer sans informer le réseau de communication sans fil de sa localisation comportent en outre des informations associées à des changements de forme de la région au fil du temps.

8. Dispositif sans fil configuré pour mettre en œuvre des opérations selon l'une quelconque des revendications 1 à 7.

9. Procédé mis en œuvre par un nœud de réseau dans un réseau non terrestre basé sur un réseau de communication sans fil, comprenant :

l'obtention (504), auprès d'un dispositif sans fil, d'informations de localisation géographique associées au dispositif sans fil, dans lequel les informations de localisation géographique indiquent une localisation ou zone géographique dans laquelle le dispositif sans fil est localisé ;

l'obtention (506) auprès du dispositif sans fil d'informations supplémentaires concernant un statut du dispositif sans fil, les informations supplémentaires comprenant un ou plusieurs de ce qui suit : statut de batterie du dispositif sans fil ; vitesse du dispositif sans fil ; et/ou direction d'avancement du dispositif sans fil,

la détermination (508), en réponse à l'obtention des informations de localisation géographique du dispositif sans fil, d'au moins une cellule du réseau de communication sans fil qui couvre la localisation géographique associée au dispositif sans fil ou chevauche complètement ou partiellement la zone associée au dispositif sans fil ;

l'identification (510) des cellules supplémentaires voisines de la cellule déterminée couvrant la localisation géographique associée au dispositif sans fil,

la détermination (512), en tenant compte des informations supplémentaires, d'une région géographique, dans laquelle la localisation géographique ou la zone associée au dispositif sans fil est incluse, au sein de laquelle le dispositif sans fil peut se déplacer sans informer le réseau de communication sans fil ;

la transmission (514), au dispositif sans fil, d'informations associées à la région géographique au sein de laquelle le dispositif sans fil peut se déplacer sans informer le réseau de communication sans fil ; et

la transmission (518) d'un message de radiomessagerie au dispositif sans fil dans l'au moins une cellule.

10. Procédé selon la revendication 9, dans lequel l'obtention des informations de localisation géographique associées au dispositif sans fil comprend la réception d'un rapport de localisation en provenance du dispositif sans fil, et dans lequel le rapport de localisation fournit la localisation géographique associée au dispositif sans fil avec moins de précision que ce que le dispositif sans fil est capable de fournir.

11. Procédé selon l'une quelconque des revendications 9 à 10, comprenant en outre la réception d'une localisation mise à jour ou d'une zone mise à jour associée au dispositif sans fil et la détermination d'une cellule mise à jour couvrant la localisation mise à jour.

12. Procédé selon la revendication 11 dans lequel la localisation mise à jour ou la zone mise à jour est reçue lors de l'occurrence de l'un quelconque parmi les suivants : le dispositif sans fil quitte la région géographique au sein de laquelle le dispositif sans fil peut se déplacer sans informer le réseau de communication sans fil ; à un moment spécifique ; lors d'un événement déclencheur ; sur une base périodique ; lorsque le dispositif sans fil s'est déplacé d'une distance seuil par rapport à la localisation géographique ; et/ou lorsque le dispositif sans fil s'est déplacé d'une distance seuil par rapport à la localisation où le dispositif sans fil était localisé au moment du rapport de la zone en guise d'informations de localisation.

13. Procédé selon l'une quelconque des revendications 9 à 12, dans lequel la détermination de la cellule couvrant la localisation géographique comprend le mappage de la région géographique au sein de laquelle le dispositif sans fil peut se déplacer sans informer le réseau de communication sans fil à un ensemble de cellules ou de cellules virtuelles qui chevauchent actuellement la région géographique.

14. Procédé selon l'une quelconque des revendications 9 à 13, dans lequel la transmission du message de radiomessagerie au dispositif sans fil comprend la transmission de messages de radiomessagerie au sein d'une région géographique de radiomessagerie de plus en plus grande avec des tentatives successives de radiomessagerie, et dans lequel une région initiale de radiomessagerie est plus petite que la région géographique au sein de laquelle le dispositif sans fil peut se déplacer sans informer le réseau de communication sans fil.

15. Noeud de réseau configuré pour mettre en œuvre des opérations selon l'une quelconque des revendications 9 à 14.

**FIGURE 1**

**FIGURE 2**

**FIGURE 3**

**FIGURE 4**

*FIGURE 5*

**Wireless communication network 50**

| Wireless Device 100 | | Network Node 200 |

- Obtain geographic location **602**

604 → Geographic location →

- Determine cell covering geographic location and determine geographic area in which WD can move **606**

608 ← Geographic area in which WD can move

- Track geographic location of WD **610**

- Location update event **612**

614 → Updated geographic location →

- Determine cell covering new geographic location and determine geographic area in which WD can move **616**

618 ← Updated geographic area in which WD can move

620 ← Paging message

*FIGURE 6*

Figure 7

710b Wireless Device

706 Network

760b Network Node

710c Wireless Device

770 Wireless Signal

762 Antenna(s)

760 Network Node

710 Wireless Device

711 Antenna(s)

714 Interface

712 Radio Front End Circuitry

718 Filter(S)    716 Amplifier(S)

792 Radio Front End Circuitry

794 Port(s)/ Terminal(s)

798 Filter(s)

796 Amplifier(s)

790 Interface

722 RF Tranceiver Circuitry

726 Application Processing Circuitry

724 Baseband Circuitry

720 Processing Circuitry

772 RF Tranceiver Circuitry

774 Baseband Circuitry

770 Processing Circuitry

737 Power Circuitry

787 Power Circuitry

730 Device Readable Medium

732 User Interface Equipment

780 Device Readable Medium

734 Auxiliary Equipment

784 Auxiliary Equipment

736 Power Source

786 Power Source

Figure 8

843b Network

843a Network

800

| 801 Processor | 805 Input/Output Interface | 809 RF Interface | 811 Network Connection Interface | 813 Power Source |

802 Bus

815 Memory

817 RAM

819 ROM

821 Storage Medium

823 Operating System

825 Application Programs

827 Data

831 Communication Subsystem

833 Transmitter

835 Receiver

EP 4 316 063 B1

46

Figure 9

900

| 920 Application | 920 App | 920 App | ... | 920 Application / virtual appliance / virtual node or server / instance |

| 940 VM | 940 VM | ... | 940 VM | 940 VM |

| 950 Virtualization Layer | 950 Virtualization Layer |

**930 HW**

960 Processing circuitry

990-1 Memory    995

970 NIC

980 Physical NI

990-2 Non transitory storage

995 Instr.

**930 HW**

960 Processing circuitry

990-1 Memory    995

970 NIC

980 Physical NI

990-2 Non transitory storage

995 Instr.

9100 Management and orchestration

9225 Antenna(s)

9225 Antenna(s)

9200 Radio Unit

9210 Receiver

9220 Transmitter

9230 Control System

EP 4 316 063 B1

FIG. 10

**1110 Host computer**

1111
SW

1112
Host application

1115
HW

1116
Communication interface

1118
Processing circuitry

**1120 Base station**

1121
SW

1125
HW

1126
Communication interface

1127
Radio interface

1128
Processing circuitry

1160

1170

1100

**1130 UE**

1131
SW

1132
Client application

1135
HW

1137
Radio interface

1138
Processing circuitry

1150

FIG. 11

BEGIN

**1210**
Host computer
provides user
data

**1211**
Host computer
executes host
application

**1220**
Host computer
initiates
transmission
carrying the
user data to the
UE

FIG. 12

**1230**
Base station
transmits the
user data

**1240**
UE executes
client
application

END

BEGIN

1310
Host computer
provides user
data

1320
Host computer
initiates
transmission
carrying the
user data to the
UE

1330
UE receives the
user data

END

FIG. 13

BEGIN

1410
UE receives input data provided at host computer

1411
UE executes client application

1420
UE provides user data

1421
UE executes client application

1430
UE initiates transmission of the user data to the host computer

FIG. 14

1440
Host computer receives user data transmitted from the UE

END

BEGIN

1510
Base station
receives user
data from UE

1520
Base station
initiates
transmission of
user data to the
host computer

1530
Host computer
receives the
user data

END

FIG. 15

Figure 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63167792
- US 2020412443 A1

### Non-patent literature cited in the description

- Geographical Area Description (GAD). *3GPP in 3GPP TS 23.032*
- Study on New Radio (NR) to support non-terrestrial networks. *TR 38.811*
- Solutions for NR to support non-terrestrial networks. *TR 38.821*
- Solutions for NR to support non-terrestrial networks (NTN) , 3GPP RAN#86. *RP-193234*
- Study on NB-lo/eMTC support for Non-Terrestrial Network, 3GPP RAN#86. *RP-193235*
- Universal Geographical Area Description (GAD). *3GPP TS 23.032*